(19)

(11) **EP 3 739 166 B1**

(12) **EUROPÄISCHE PATENTSCHRIFT**

(45) Veröffentlichungstag und Bekanntmachung des Hinweises auf die Patenterteilung:
**13.04.2022 Patentblatt 2022/15**

(21) Anmeldenummer: **20198997.7**

(22) Anmeldetag: **29.09.2020**

(51) Internationale Patentklassifikation (IPC):
***F04D 19/04*** $^{(2006.01)}$ ***F01C 21/10*** $^{(2006.01)}$
***F04C 25/02*** $^{(2006.01)}$

(52) Gemeinsame Patentklassifikation (CPC):
**F04C 18/0215; F01C 21/10; F04C 18/0253; F04C 18/0284; F04C 25/02; F04C 29/04;**
F04C 2230/10; F04C 2230/605; F04C 2240/805; F04C 2240/808; F04C 2270/18; F04C 2270/19

(54) **SCROLLVAKUUMPUMPE UND IHR HERSTELLUNGSVERFAHREN**

VACUUM PUMP, SCROLL PUMP AND METHOD OF MANUFACTURING SAME AND CHECK VALVE

POMPE À VIDE, POMPE D’EXTRACTION ET PROCÉDÉ DE FABRICATION DE TELLES POMPES ET CLAPET ANTI-RETOUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2019 EP 19201745**
**07.10.2019 EP 19201749**

(43) Veröffentlichungstag der Anmeldung:
**18.11.2020 Patentblatt 2020/47**

(60) Teilanmeldung:
**22156933.8 / 3 974 655**

(73) Patentinhaber: **PFEIFFER VACUUM GMBH**
**35614 Asslar (DE)**

(72) Erfinder:
- **Willig, Michael**
  **35633 Lahnau (DE)**
- **Hofmann, Jan**
  **35305 Grünberg (DE)**
- **Becker, Jonas**
  **35649 Bischoffen (DE)**
- **Bernhardt, Gernot**
  **35625 Hüttenberg (DE)**
- **Wangorsch, Verena**
  **35586 Wetzlar (DE)**
- **Kallenborn, Stefan**
  **35578 Wetzlar (DE)**
- **Söhngen, Wolfgang**
  **35647 Waldsolms (DE)**
- **Schaefer, Heiko**
  **35606 Solms-Niederbiel (DE)**
- **Harapat, Erhard**
  **35614 Aßlar (DE)**
- **Pauli, Lars**
  **35606 Solms (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:

| | |
|---|---|
| **EP-A2- 0 798 463** | **CN-A- 103 084 887** |
| **CN-U- 204 941 844** | **CN-U- 206 010 470** |
| **DE-A1-102018 107 276** | **FR-A1- 2 985 557** |
| **FR-A1- 3 053 090** | **JP-A- 2013 100 760** |
| **JP-A- 2015 172 358** | **KR-B1- 101 869 386** |
| **US-A- 5 209 653** | **US-A- 5 743 719** |
| **US-A- 5 971 725** | **US-A1- 2002 025 265** |
| **US-A1- 2005 019 169** | **US-A1- 2008 181 801** |
| **US-A1- 2010 028 185** | **US-A1- 2010 223 947** |
| **US-A1- 2013 251 543** | **US-A1- 2019 120 237** |
| **US-B2- 7 162 797** | **US-B2- 9 534 506** |
| **US-B2- 9 885 358** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 739 166 B1

Printed by Jouve, 75001 PARIS (FR)

## Beschreibung

Die vorliegende Anmeldung betrifft die Verbesserung von Vakuumpumpen, nämlich Scrollpumpen, und Herstellungsverfahren für solche.

Die US 2013/251543 A1 offenbart einen Scroll-Kompressor mit einem beweglichen, zum Erzeugen einer Pumpwirkung exzentrisch erregbaren Spiralbauteil, wobei das Spiralbauteil eine Grundplatte und eine sich ausgehend von der Grundplatte erstreckende Spiralwand aufweist.

Weiteren Stand der Technik bilden die US 2008/181801 A1, die CN 206 010 470 U und die CN 103 084 887 A.

Die Erfindung geht aus von einer Scrollpumpe umfassend ein bewegliches, zum Erzeugen einer Pumpwirkung exzentrisch erregbares Spiralbauteil, wobei das Spiralbauteil eine Grundplatte und eine sich ausgehend von der Grundplatte erstreckende Spiralwand aufweist. Es ist eine Aufgabe der Erfindung, die Herstellung einer derartigen Scrollpumpe zu vereinfachen. Diese Aufgabe wird insbesondere dadurch gelöst, dass außen an der Grundplatte wenigstens zwei über den Umfang der Grundplatte beabstandete Haltevorsprünge vorgesehen sind.

Während sich die Spiralwand von einer Flachseite der Grundplatte aus erstreckt und somit in axialer Richtung von der Grundplatte absteht, handelt es sich bei den Haltevorsprüngen um radiale Vorsprünge, die in radialer Richtung vom Umfang der Grundplatte, also vom radial äußeren Rand der Grundplatte abstehen.

An diesen Haltevorsprüngen lässt sich das Spiralbauteil auf einfache Weise, insbesondere direkt, einspannen. Die Haltevorsprünge sind insbesondere umfangsseitig angeordnet und/oder über den Umfang gleichmäßig verteilt.

Mit Vorteil kann vorgesehen sein, dass wenigstens oder genau drei oder vier Haltevorsprünge vorgesehen sind.

Die Haltevorsprünge können bevorzugt so ausgeführt sein, dass die Rohmaterialabmessungen durch die Haltevorsprünge nicht vergrößert werden.

Zum Beispiel kann ein erster Zwischenabschnitt des Umfangs der Grundplatte zwischen zwei benachbarten Haltevorsprüngen eine größere radiale Höhe aufweisen, als ein zweiter Zwischenabschnitt. Hierdurch kann auf einfache Weise eine größere Masse im ersten Zwischenabschnitt erreicht werden, was z.B. einem Unwuchtausgleich dienen kann.

Vorzugsweise kann es vorgesehen sein, dass der erste Zwischenabschnitt einem äußersten 120°-Abschnitt und/oder einem äußersten 180°-Abschnitt der Spiralwand zumindest im Wesentlichen gegenüberliegend angeordnet ist. Hierdurch wird die Masse des äußersten Abschnitts der Spiralwand auf einfache Weise durch den ersten Zwischenabschnitt ausgeglichen.

Gemäß einer weiteren Ausführungsform ist vorgesehen, dass im Bereich oder der Nähe von wenigstens einem Haltevorsprung keine Befestigungsbohrung in der Grundplatte angeordnet ist. Hierdurch kann auf einfache Weise die Stabilität des Spiralbauteils verbessert werden, da eine Haltekraft, die einer Einspannvorrichtung durch die Haltevorsprünge entgegengesetzt ist, nicht durch eine in der Nähe befindliche Befestigungsbohrung geschwächt wird. Eine Befestigungsbohrung im Spiralbauteil kann beispielsweise einer späteren Befestigung eines Wellbalgs und/oder eines Lagerelements dienen.

Die Aufgabe der Erfindung wird auch durch ein Verfahren zur Herstellung einer Scrollpumpe gelöst, insbesondere einer solchen nach vorstehend beschriebener Art, wobei die Scrollpumpe ein bewegliches, zum Erzeugen einer Pumpwirkung exzentrisch erregbares Spiralbauteil aufweist, wobei das Spiralbauteil mit einer Grundplatte direkt in eine Einspannvorrichtung eingespannt ist.

Durch die direkte Einspannung ist das Verfahren erheblich vereinfacht. Insbesondere ist keine am Spiralbauteil anzubringende Spannhilfe nötig.

Z.B. werden für das Spiralbauteil eine Grundplatte und eine sich ausgehend von der Grundplatte erstreckende Spiralwand gemeinsam spanend hergestellt. Vorzugsweise kann die Einspannvorrichtung ein Backenfutter umfassen oder sein. Alternativ oder zusätzlich können vorzugsweise die Backen eines Backenfutters der Einspannvorrichtung an wenigstens zwei, außen an der Grundplatte angeordneten, über deren Umfang beanstandeten Haltevorsprüngen angreifen.

Gemäß einer Weiterbildung ist vorgesehen, dass die Einspannvorrichtung derart ausgebildet ist, dass ein Werkzeugzugang zu dem Spiralbauteil sowohl von einer Seite der Grundplatte, an der die Spiralwand ausgebildet ist, als auch von der anderen, insbesondere gegenüberliegenden, Seite der Grundplatte ermöglicht ist. Dabei kann vorzugsweise das Spiralbauteil zumindest im Wesentlichen in einer Einspannung von beiden Seiten bearbeitet und/oder mit Bearbeitung von beiden Seiten gefertigt werden.

Die Einspannvorrichtung kann bevorzugt ein Backenfutter, insbesondere ein Drei- oder Vierbackenfutter sein oder umfassen.

Vorzugsweise kann es sich um ein Backenfutter handeln, welches zum Beispiel eine durchgehende Ausnehmung, insbesondere Bohrung, aufweist.

Bei einer Weiterbildung umfasst die Scrollpumpe ein Spiralbauteil, welches eine Grundplatte und eine sich ausgehend von der Grundplatte erstreckende Spiralwand aufweist, wobei die Spiralwand an ihrem der Grundplatte abgewandten Ende eine Nut aufweist, in der ein Dichtungselement aufgenommen ist, wobei die Nut durch zwei gegenüberliegende Seitenwände begrenzt ist. Es ist eine Aufgabe, die Handhabung des Spiralbauteils bei der Montage der Scrollpumpe zu vereinfachen und/oder die Gefahr einer Beschädigung des Spiralbauteils bei der Handhabung zu verringern. Diese Aufgabe wird insbesondere dadurch gelöst, dass in einem ersten Spiralabschnitt eine erste der Seitenwände dicker ist als eine zweite der Seitenwände im ersten Spiralabschnitt und/oder als eine oder beide Seitenwände in einem zweiten Spiralabschnitt.

Durch die örtlich dickere Ausführung der Seitenwand ist diese lokal gestärkt, insbesondere in einem für eine Beschädigung anfälligen Bereich. Die Gefahr einer Beschädigung wird somit verringert und die Handhabung ist erleichtert.

Gemäß einem Ausführungsbeispiel ist vorgesehen, dass der erste Spiralabschnitt ein äußerer Endabschnitt der Spiralwand ist. Dieser ist für eine Beschädigung besonders anfällig. Weiter innen liegende Spiralabschnitte sind insbesondere durch außen liegende Spiralabschnitte geschützt, sodass innen keine "Aufdickung" nötig ist. Im Sinne einer insgesamt vorzugsweise geringen Masse weist daher vorzugsweise nur der äußere Endabschnitt der Spiralwand eine Aufdickung auf.

Generell kann der erste Spiralabschnitt bevorzugt zumindest im Wesentlichen innerhalb der letzten halben Windung der Spiralwand angeordnet sein. Dieser ist besonders für eine Schädigung gefährdet. Dabei wird vorteilhaft ausgenutzt, dass eine vorletzte Hälfte der Windung zwar auch grundsätzlich außen angeordnet ist, jedoch durch einen größeren Überstand der Grundplatte bereits einen gewissen Schutz aufweist. Somit kann die Masse des Spiralbauteils relativ klein gehalten werden.

Eine Weiterbildung sieht vor, dass sich der erste Spiralabschnitt wenigstens über 100°, vorzugsweise wenigstens über 140°, erstreckt. Vorzugsweise kann sich der erste Spiralabschnitt alternativ oder zusätzlich höchstens über 200°, bevorzugt über höchstens 180°, erstrecken. In den angegebenen Bereichen entfalten sich die erfindungsgemäßen Vorteile in besonders großem Maße.

Gemäß einem weiteren Ausführungsbeispiel ist der erste Spiralabschnitt in einem nicht pumpaktiven Bereich der Spiralwand angeordnet. Hierdurch wird vorteilhaft ausgenutzt, dass in einem solchen nicht pumpaktiven Bereich generell weniger strenge Fertigungstoleranzen nötig sind. Die Aufdickung lässt sich somit besonders einfach herstellen.

Die erste Seitenwand kann gemäß einem weiteren, vorteilhaften Beispiel eine radial äußere Seitenwand sein. Dies ermöglicht eine besonders starke Verringerung der Beschädigungsgefahr.

Vorzugsweise kann die erste Seitenwand beispielsweise um wenigstens 0,2 mm und/oder um höchstens 1 mm, insbesondere höchstens 0,7 mm, insbesondere höchstens 0,4 mm dicker sein. Dies ermöglicht eine besonders gute Stabilisierung, insbesondere bei relativ geringer zusätzlicher Masse.

Eine weitere Ausführungsform sieht vor, dass das Spiralbauteil beweglich und zum Erzeugen einer Pumpwirkung exzentrisch erregbar ist. Die erfindungsgemäßen Vorteile entfalten sich im besonderen Maße an dem beweglichen Spiralbauteil.

Nach einer Weiterbildung umfasst die Scrollpumpe ein Elektronikgehäuse, in dem eine oder mehrere Elektronikkomponenten angeordnet sind. Es ist eine Aufgabe, eine gute Wärmeabfuhr von den Elektronikkomponenten bzw. eine gute Kühlung bereitzustellen. Diese Aufgabe wird insbesondere dadurch gelöst, dass innerhalb des Elektronikgehäuses für wenigstens eine Elektronikkomponente eine gesonderte Kammer vorgesehen ist, in der die Elektronikkomponente vergossen ist.

Neben der besonders guten Wärmeabfuhr schirmt die Kammer die Elektronikkomponente zusätzlich ab, insbesondere gegenüber Wärmestrahlung und elektromagnetischen Einflüssen. Zudem ermöglicht die gesonderte Kammer die Verwendung von relativ wenig Vergussmaterial, welches häufig teuer ist. Bevorzugt kann das Elektronikgehäuse aus Metall ausgebildet sein.

Das zum Vergießen verwendete Vergussmaterial ist insbesondere wärmeleitend und/oder elektrisch isolierend ausgebildet.

Es können z.B. auch mehrere gesonderte Kammern vorgesehen sein. Eine Ausführungsform sieht vor, dass in den mehreren Kammern jeweils wenigstens eine Elektronikkomponente vergossen ist. So lassen sich insbesondere verschiedene Elektronikkomponenten zuverlässig voneinander trennen, insbesondere voneinander abschirmen. Gleichzeitig wird eine vorteilhafte Wärmeabfuhr ermöglicht.

Es kann beispielsweise und mit Vorteil vorgesehen sein, dass wenigstens eine gesonderte Kammer vorgesehen ist, in der keine Elektronikkomponente vergossen ist. Generell kann ein Elektronikgehäuses beispielsweise für verschiedene Pumpen, insbesondere einer Baureihe, identisch ausgelegt werden, wobei gesonderte Kammern für verschiedene Elektronikkomponenten bereitgestellt werden, welche abhängig von der Pumpenart in die Kammern eingebaut sind oder nicht. Insofern ist es vorteilhaft, wenigstens eine gesonderte Kammer bereitzuhalten, in welche eine Elektronikkomponente eingebaut werden kann, insbesondere vergossen werden kann, welche bei einer anderen Pumpenart Verwendung findet. Es lässt sich somit eine Art Baukastensystem realisieren, was erhebliche Kostenvorteile in der Herstellung ermöglicht.

Nach einer Weiterbildung wird von der Scrollpumpe der Erfindung ausgegangen. Es ist eine Aufgabe, die Anwendung der Scrollpumpe in einem Vakuumsystem zu vereinfachen. Diese Aufgabe wird insbesondere dadurch gelöst, dass die Pumpe einen integrierten Drucksensor umfasst.

Ein Vakuumsystem umfasst meist bereits einen Drucksensor, zum Beispiel in einer Vakuumkammer. Durch die Integration des Drucksensors in die Scrollpumpe kann diese nun weitgehend eigenständig und ohne aufwändige Verbindung zum Drucksensor des Vakuumsystems betrieben werden. Umgekehrt kann ein zusätzlicher Drucksensor im Vakuumsystem beispielsweise entfallen. Generell ermöglicht der integrierte Drucksensor, dass sich die Scrollpumpe selbst überwacht und dies nicht aufwendig durch ein Prozessleitsystem durchgeführt werden muss. So kann insbesondere ein Verschleißzustand der Pumpe abhängig von einem gemessenen Druck überwacht werden. Insbesondere für den Fall, dass die Scrollpumpe als Vorpumpe für eine Hochvakuumpumpe vorgesehen ist, kann durch den integrierten Drucksensor außerdem eine erhöhte Betriebssicherheit gewährleistet werden. So kann beispielsweise bei einem zu hohen Druck in der Scrollpumpe die Hochvakuumpumpe abgeschaltet und/oder zwischengeschaltete Ventile geschlossen werden oder ähnliche Maßnahmen ergriffen werden. Die Hockvakuumpumpe kann so zuverlässig vor einen Betrieb bei zu hohem Druck geschützt werden.

Vorzugsweise kann der Drucksensor in eine Steuerung der Scrollpumpe und/oder eines Vakuumsystems eingebunden sein. Die Scrollpumpe bzw. das Vakuumsystem können somit besser gesteuert bzw. geregelt werden, und zwar auf Basis des nun bekannten Drucks in der Scrollpumpe.

Gemäß einer Ausführungsform ist vorgesehen, dass der Drucksensor zum Messen eines Ansaugdrucks der Pumpe oder eines Drucks zwischen zwei pumpaktiven Spiralwänden bzw. zwischen zwei Spiralwänden in einem pumpaktiven Spiralabschnitt vorgesehen ist. Beides ermöglicht eine noch genauere Überwachung des Pumpprozesses und eines Verschleißzustandes der Pumpe, insbesondere eines Dichtungselements, wie etwa eines Tip Seals, oder der Spiralwände.

Bei einer weiteren vorteilhaften Ausführungsform ist der Drucksensor in ein Bauteil der Scrollpumpe eingeschraubt. Dies ermöglicht einerseits einen einfachen Aufbau und andererseits einen flexiblen Vertrieb der Scrollpumpe. Anstelle des integrierten Drucksensors kann beispielsweise einfach ein Blindstopfen vorgesehen sein, wenn für den Prozess des Anwenders kein integrierter Drucksensor unbedingt nötig ist. Gleichwohl lässt sich in diesem Fall ein integrierter Drucksensor auf einfache Weise nachrüsten. Das Bauteil, in welches der Drucksensor eingeschraubt ist, kann beispielsweise ein Gehäuseelement und/oder festes Spiralbauteil sein. Insbesondere kann der Drucksensor axial in ein festes Spiralbauteil eingeschraubt sein.

Gemäß einer Weiterbildung kann vorgesehen sein, dass der Drucksensor in einem Kühlluftstrom einer Kühleinrichtung, beispielsweise eines Lüfters, der Pumpe angeordnet ist. Der Drucksensor kann so auf vorteilhafte Weise direkt gekühlt werden, was seine Lebensdauer und Messgenauigkeit verbessert. Vorzugsweise kann der Drucksensor zumindest im Wesentlichen am Anfang des Kühlluftstromes, nämlich benachbart zu einem Lüfter und/oder innerhalb einer Luftleithaube angeordnet sein.

Grundsätzlich können zum Beispiel auch mehrere Drucksensoren vorgesehen sein, die in die Scrollpumpe integriert sind. Hierdurch können insbesondere Steuerung und Verschleißüberwachung noch weiter verbessert werden.

Nach einer Weiterbildung des erfindungsgemäßen Herstellungsverfahren kann die Herstellung der Scrollpumpe zusätzlich umfassen: ein Verfahren zum Montieren der Scrollpumpe ausgegangen, wobei die Scrollpumpe eine Exzenterwelle zum exzentrischen Erregen eines beweglichen Spiralbauteils der Pumpe umfasst, bei dem eine Mehrzahl an Ausgleichsgewichten unterschiedlicher Art jeweils zum Befestigen an einer Exzenterwelle einer Scrollpumpe einer bestimmten Art bereitgestellt werden. Es ist eine Aufgabe, die Montage besonders zuverlässig durchführen zu können. Diese Aufgabe wird insbesondere dadurch gelöst, dass die Exzenterwelle, die Ausgleichsgewichte und/oder ein weiteres Bauteil der Pumpe, zum Beispiel ein Pumpengehäuse, so dimensioniert sind, dass an einer bestimmten Befestigungsposition nur eine bestimmte Art von Ausgleichsgewicht an der Exzenterwelle montierbar ist.

Somit kann eine Fehlmontage von Ausgleichsgewichten einer für die betreffende Pumpe falschen Art zuverlässig vermieden werden. Die Montage wird somit insgesamt zuverlässiger.

Der Begriff "nicht montierbar" umfasst, dass ein Ausgleichsgewicht zwar befestigt werden kann, aber eine weitere Montage, beispielsweise ein Einstecken der Welle in ein Pumpengehäuse, nicht vollständig möglich ist. Der Monteur merkt also, dass etwas falsch ist, weil er die Montage nicht abschließen kann. Hierdurch wird auf besonders einfache Weise eine korrekte Montage sichergestellt. "Nicht montierbar" kann außerdem bedeuten, dass das Ausgleichsgewicht nicht flächig mit einer am Ausgleichsgewicht vorgesehenen Anlagefläche an der Exzenterwelle anliegen kann, beispielsweise weil dies durch einen Absatz an der Welle verhindert ist. Generell kann also zum Beispiel ein Ausgleichsgewicht einer falschen Art nicht mit der Exzenterwelle vollständig in Anlage bringbar sein. Generell kann zum Beispiel eine Exzenterwelle mit montiertem Ausgleichsgewicht einer falschen Art nicht vollständig in ein Pumpengehäuse der Pumpe einsteckbar sein.

Zum Beispiel kann vorgesehen sein, dass die Exzenterwelle und/oder das weitere Bauteil mit Ausgleichsgewichten wenigstens einer ersten Art bei einer versuchten Montage kollidiert. Die erste Art stellt dabei eine falsche Art für die betreffende Exzenterwelle dar.

Bei einigen Ausführungsformen weist die Exzenterwelle und/oder das weitere Bauteil einen Vorsprung und/oder Absatz auf, der mit Ausgleichsgewichten wenigstens einer ersten Art bei einer versuchten Montage kollidiert. Hierdurch ist eine Fehlmontage auf besonders einfache Weise verhindert.

Bei einer Weiterbildung wird ausgegangen von einer erfindungsgemäßen Scrollpumpe mit einem Pumpenkörper, dessen Innenseite einen Pumpraum begrenzt und an dessen Außenseite ein Ventil zur Steuerung der Zufuhr eines Ballastgases in den Pumpraum angeordnet ist, wobei das Ventil einen Betätigungsgriff aufweist, der über wenigstens eine Befestigungsschraube mit einem statischen Element des Ventils drehbar und/oder mit einem drehbaren Element des Ventils fest verbunden ist, wobei die Befestigungsschraube durch eine Bohrung im Betätigungsgriff in das statische Element bzw. das drehbare Element eingeschraubt ist. Es ist eine Aufgabe, die Lebensdauer und/oder ein Wartungsintervall des Ventils und/oder wenigstens einer seiner Komponenten zu verlängern. Diese Aufgabe wird insbesondere dadurch gelöst, dass ein Deckel vorgesehen ist, der die Bohrung verschließt.

Durch den Deckel wird das Eindringen von Verschmutzungen in die Bohrung und schlussendlich in funktionssensible Bereiche verhindert oder zumindest verringert.

Das Ventil kann beispielsweise einen, insbesondere axial, verpressten O-Ring als Dichtmittel aufweisen. Bei Betätigung des Ventils wird eine Relativbewegung auf den O-Ring ausgeübt. Gelangen Verschmutzungen, zum Beispiel Partikel, an die Gleitfläche des O-Rings, so kann dies zu einem frühzeitigen Ausfall des O-Rings führen. Durch den Deckel wird dies zuverlässig verringert oder verhindert.

Bei dem Pumpenkörper kann es sich zum Beispiel um ein statisches Spiralbauteil und/oder ein Gehäusebauteil handeln.

Der Deckel kann zum Beispiel in den Betätigungsgriff eingesteckt sein. Beispielsweise kann der Deckel in die oder eine Bohrung eingesteckt sein. Weiter generell beispielsweise kann der Deckel durch eine Übermaßpassung am Betätigungsgriff, insbesondere in der Bohrung, gehalten sein. Zum Einstecken kann der Deckel beispielsweise einen oder mehrere Vorsprünge, zum Beispiel in Form eines Zapfens, aufweisen.

Es kann weiter vorgesehen sein, dass der Deckel in wenigstens zwei Bohrungen eingesteckt ist und/oder dass der Deckel wenigstens eine Bohrung verschließt, in die er nicht eingesteckt ist.

Bei einer weiteren Ausführungsform weist der Betätigungsgriff ein Basiselement aus Metall und zumindest in einem zwecks manueller Betätigung anfassbaren Bereich einen Kunststoffabschnitt auf. Dies sorgt für eine gute Korrosionsbeständigkeit bei gleichzeitig niedrigen Herstellkosten. Des Weiteren bleibt der Kunststoffabschnitt aufgrund der gegenüber Metall eingeschränkten Wärmeleitung kühler bzw. lässt sich besser bedienen. Das Basiselement kann beispielsweise aus Edelstahl hergestellt sein. Dieses kann zum Beispiel mit Kunststoff umspritzt sein. Das Basiselement kann z.B. ein Rückschlagventil und/oder ein Anschlussgewinde umfassen.

Im Betätigungsgriff kann z.B. ein Rückschlagventil integriert angeordnet sein. Weiter beispielsweise kann das Gasballastventil insbesondere zweistufig ausgebildet sein. Weiter beispielsweise kann im Betätigungsgriff ein Einlass und/oder ein Anschluss für das Ballastgas vorgesehen sein.

Bei einer Weiterbildung wird ausgegangen von einer erfindungsgemäßen Scrollpumpe mit einem in seiner Drehzahl steuerbaren Lüfter zur Kühlung der Pumpe. Es ist eine Aufgabe, die Kühlung besonders bedarfsgerecht zu gestalten und/oder die Schallemission des Lüfters zu reduzieren. Diese Aufgabe wird insbesondere dadurch gelöst, dass diese einen Temperatursensor und eine Steuerungseinrichtung aufweist, welche dazu ausgebildet ist, die Drehzahl des Lüfters in Abhängigkeit von einer Leistungsaufnahme eines Antriebs der Pumpe und einer vom Temperatursensor gemessenen Temperatur zu regeln.

Bei der gemessenen Temperatur kann es sich vorzugsweise um eine Temperatur in der Pumpe, zum Beispiel eines Pumpenbauteils und/oder eines Raumes in der Pumpe, zum Beispiel eines Ansaug- oder Pumpraumes, handeln. Bei einer Ausführungsform ist vorgesehen, dass die Regelung in Abhängigkeit von einer vom Temperatursensor gemessenen Temperatur eines Motors, einer Motorwicklung, einer Antriebs- oder Leistungselektronik, eines Pumpkörpers und/oder eines Gehäuses der Pumpe erfolgt. Grundsätzlich können diese Temperaturwerte beispielsweise von mehreren Temperatursensoren gemessen werden oder es können generell mehrere Temperatursensoren vorgesehen sein.

Gemäß einer Ausführungsform ist vorgesehen, dass ein erster Schwellwert der Temperatur definiert ist, wobei die Regelung nur bei einer gemessenen Temperatur oberhalb des ersten Schwellwerts erfolgt und/oder wobei unterhalb des ersten Schwellwerts die Drehzahl des Lüfters konstant bei Null oder einer Minimaldrehzahl gehalten wird. Hierdurch kann die Schallemission des Lüfters geringgehalten werden, wenn der Kühlungsbedarf gering ist, nämlich wenn die gemessene Temperatur gering ist. Außerdem kann sich hierdurch die Pumpe nach dem Anschalten schnell auf eine gewünschte Betriebstemperatur erwärmen. Dies ist zum Beispiel vorteilhaft, weil die Spaltmaße zwischen den Spiralen abhängig sind von einer Wärmeausdehnung der Bauteile und daher nur im Rahmen bestimmter Betriebstemperaturbereiche optimal sind. Die Ausführungsform ermöglicht also ein schnelles Erreichen einer vorteilhaften Pumpperformance. Außerdem wird durch eine schnelle Erhöhung der Temperatur eine verbesserte Verträglichkeit gegenüber kondensierenden Medien erreicht.

Der erste Schwellwert kann bevorzugt wenigstens 40°C und/oder höchstens 60°C, insbesondere etwa 50°C, betragen. Die Minimaldrehzahl ist generell niedriger als eine Maximaldrehzahl, insbesondere deutlich niedriger, beträgt insbesondere weniger als 30 %, insbesondere weniger als 20 %, insbesondere weniger als 10 % der Maximaldrehzahl.

Gemäß einer weiteren Ausführungsform ist ein zweiter Schwellwert der Temperatur definiert, wobei bei einer gemessenen Temperatur oberhalb des zweiten Schwellwerts die Lüfterdrehzahl konstant auf einer Maximaldrehzahl gehalten wird. Hierdurch wird auf einfache Weise bei hohen Temperaturen sichergestellt, dass die maximale Kühlleistung erreicht wird. Die Kühlung kann somit auf einfache Weise bedarfsgerecht ausgeführt werden. Generell ist die Ausführungsform mit dem zweiten Schwellwert unabhängig von der Ausführungsform mit dem ersten Schwellwert und umgekehrt. Diese sind aber vorteilhaft kombinierbar. Insofern ist die Bezeichnung "zweiter" Schwellwert lediglich zur erleichterten Bezugnahme gewählt und erfordert nicht, dass außerdem ein "erster" Schwellwert definiert ist.

Die vorstehend beschriebenen Schwellwerte können für den Fall, dass mehrere Temperatursensoren vorgesehen sind, beispielsweise für die mehreren Temperatursensoren unterschiedlich sein.

Die Steuerungseinrichtung kann beispielsweise dazu ausgebildet sein, in Abhängigkeit von einer von einem Temperatursensor gemessenen Temperatur der Vakuumpumpe eine Antriebsleistung der Pumpe zu reduzieren. Diese Funktion kann auch als "Derating" bezeichnet werden. Es kann beispielsweise vorgesehen sein, dass der Lüfter auf seine Maximaldrehzahl eingestellt wird, wenn eine Derating-Bedingung erfüllt ist und/oder wenn sich die Pumpe in einem Derating-Zustand befindet, wenn also die Antriebsleistung reduziert ist.

Die Drehzahl des Lüfters kann bevorzugt mittel Pulsweitenmodulation (PWM) gesteuert werden.

Eine Maximaldrehzahl des Lüfters kann beispielsweise anpassbar sein. So kann es zum Beispiel zum Zwecke einer erhöhten Wasserdampfverträglichkeit vorteilhaft sein, die Maximaldrehzahl des Lüfters zu reduzieren.

Eine Weiterbildung geht aus von einer erfindungsgemäßen Scrollpumpe umfassend einen elektrisch angetriebenen Lüfter und eine Luftleithaube. Es ist eine Aufgabe, eine elektrische Verbindung des Lüfters zu einem Versorgungsanschluss besonders zuverlässig, insbesondere für eine lange Zeit verlässlich, herzustellen. Diese Aufgabe wird insbesondere dadurch gelöst, dass ein Leiter, vorzugsweise ein Kabel, vom Lüfter, vorzugsweise durch die Luftleithaube, zu einem Versorgungsanschluss für den Lüfter führt, wobei der Leiter über einen, bevorzugt lösbaren, elektrischen Verbinder, vorzugsweise einen Stecker, mit dem Versorgungsanschluss verbunden ist, wobei der Verbinder von einem durch die Luftleithaube definierten Luftströmungsweg mittels einer Trennwand getrennt ist. Bevorzugt kann der Verbinder zumindest teilweise innerhalb der Luftleithaube angeordnet sein. Die Trennwand kann z.B. mit der Luftleithaube einteilig verbunden sein.

Über den Lüfter wird Umgebungsluft angesaugt, die auch Verschmutzungen und Stäube umfassen kann, und entlang eines definierten Luftströmungsweges geleitet. Durch die Trennwand wird verhindert, dass die angesaugten Verunreinigungen bzw. Stäube nicht zu dem Verbinder und insbesondere in der Folge nicht in ein Elektronikgehäuse der Pumpe eindringen können. Vielmehr bewirkt die Trennwand, dass die angesaugte Luft lediglich an dem Verbinder beabstandet vorbeigeleitet wird.

Der Lüfter kann vorzugsweise an der Luftleithaube angeordnet, insbesondere an dieser befestigt, sein. Der Verbinder kann bevorzugt lösbar ausgebildet sein.

Bei einer Ausführungsform ist vorgesehen, dass der Leiter, insbesondere das Kabel, vom Verbinder durch eine Ausnehmung in der Trennwand geführt ist. So kann auf einfache Weise der Leiter vom Verbinder zum Lüfter geführt werden. Die Ausnehmung kann beispielsweise eine Kerbe sein, die bevorzugt V-förmig ausgebildet sein kann.

Eine weitere Ausführungsform sieht vor, dass die Ausnehmung in Umfangsrichtung versetzt zum Verbinder angeordnet ist. Hierdurch wird ein Weg von der Ausnehmung zum Verbinder verlängert, sodass durch die Ausnehmung durchtretende Verunreinigungen einen längeren Weg zum Verbinder zurücklegen müssen und somit die Wahrscheinlichkeit verringert ist, dass diese den Verbinder erreichen. Hierdurch ist auf einfache Weise ein Labyrintheffekt realisiert.

Bei einer Weiterbildung wird ausgegangen von einer erfindungsgemäßen Scrollpumpe umfassend ein im Betrieb feststehendes Spiralbauteil, welches mit einem Gehäuseelement der Pumpe lösbar verbunden ist. Es ist eine Aufgabe, ein Lösen des Spiralbauteils von dem Gehäuseelement zu vereinfachen. Diese Aufgabe wird insbesondere dadurch gelöst, dass am Spiralbauteil und/oder am Gehäuseelement wenigstens ein Abdrückgewinde zum Lösen des Spiralbauteils vom Gehäuseelement vorgesehen ist, vorzugsweise wobei zwei radial gegenüberliegend angeordnete Abdrückgewinde vorgesehen sind.

Durch das Abdrückgewinde kann das Spiralbauteil auf einfache und definierte Art vom Gehäuseelement abgedrückt und somit gelöst werden.

Generell bevorzugt ist axial fluchtend zum Abdrückgewinde am jeweils anderen Bauteil keine zugeordnete Durchgangsbohrung vorhanden. Vielmehr kann bevorzugt am Abdrückgewinde eine ebene Fläche oder eine Senkung des anderen Bauteils anliegen bzw. dieser zugeordnet sein.

Generell können auch mehrere, insbesondere wenigstens zwei Abdrückgewinde vorgesehen sein, die vorzugsweise über den Umfang gleichmäßig verteilt und/oder radial gegenüberliegend angeordnet sein können. Hierdurch lässt sich das Spiralbauteil besonders gleichmäßig lösen. So kann zum Beispiel ein Verkanten vermieden werden, wie es beispielsweise ohne Abdrückgewinde beim Lösen eines Spiralbauteils auftreten könnte, welches mit einer Übergangspassung am Gehäuseelement anliegt. Auch könnten etwaig vorhandene Dichtmittel verkanten oder blockieren. Durch die, insbesondere mehreren, Abdrückgewinde können diese Probleme der ungleichmäßigen Beaufschlagung vermieden oder zumindest verringert werden.

Gemäß einer weiteren Ausführungsform ist vorgesehen, dass ein zum Spiralbauteil und/oder zum Gehäuseelement benachbartes Bauteil derart ausgebildet ist, dass es mit einem Schraubenkopf einer etwaig in das Abdrückgewinde eingeschraubten Abdrückschraube kollidieren würde, sodass das Bauteil nicht vollständig montierbar wäre. Hierdurch kann auf einfache Weise eine Fehlmontage vermieden werden, denn es ist sichergestellt, dass keine Schraube in das Abdrückgewinde eingeschraubt ist, die zum Beispiel eine korrekte Anlage des Spiralbauteils am Gehäuseelement verhindern könnte. Bei dem Bauteil kann es sich insbesondere um eine Luftleithaube handeln. Zur Kollision mit dem Schraubenkopf kann beispielsweise ein Vorsprung und/oder ein Dom vorgesehen sein.

Gemäß einer Weiterbildung umfasst die erfindungsgemäße Scrollpumpe ein Rückschlagventil, wobei das Rückschlagventil einen Durchgang für ein Fluid, ein bewegliches Schließelement und einen Dichtungssitz umfasst, wobei das Schließelement und der Dichtungssitz derart korrespondierend ausgebildet sind, dass das Schließelement den Durchgang sperrt, wenn es sich in Anlage mit dem Dichtungssitz befindet.

Rückschlagventile werden zum Beispiel in verschiedenen Vakuumgeräten eingesetzt. So kann etwa in einer Vakuumpumpe ein Gasballastventil mit einem integrierten Rückschlagventil ausgestattet sein. Ein Gasballastventil dient typischerweise dem Zweck, ein Ballastgas, wie zum Beispiel Luft oder ein anderes Gas oder Gasgemisch, in einen Pumpraum einer Vakuumpumpe zuzuführen. Dies dient beispielsweise dazu, ein Kondensieren des von der Vakuumpumpe zu fördernden Mediums oder einzelner Bestandteile desselben zu vermeiden, um die Pumpe vor Korrosion und Kondensatansammlung zu schützen. Auch kann das Zuführen von Ballastgas beispielsweise der Verdünnung des Prozessgases, also des zu fördernden Mediums, dienen.

Ein Rückschlagventil öffnet und schließt sich typischerweise aufgrund einer Druckdifferenz über das Ventil, gegebenenfalls in Abhängigkeit von einer Federkraft einer Feder, welche das Schließelement gegen den Dichtungssitz vorspannt.

Wenn das Schließelement bei einer Schließbewegung an dem Dichtungssitz anschlägt, verursacht dies ein Geräusch. Die Lautstärke dieses Geräusches ist unter anderem abhängig von der Geschwindigkeit des Schließelements, die von den Druckverhältnissen sowie gegebenenfalls einer Federkraft abhängt. Wenn sich der Druck auf wenigstens einer Seite des Ventils häufig oder kontinuierlich ändert, dann kommt es außerdem zu häufigen Ventilbetätigungen und somit zu häufigen Anschlägen des Schließelements am Dichtungssitz mit entsprechender Geräuschentwicklung.

Besonders relevant ist die vorstehend beschriebene Problematik bei Vakuumgeräten und insbesondere bei Vakuumpumpen. Bei Vakuumgeräten im Allgemeinen, beispielsweise auch bei einer Vakuumkammer, betrifft dies insbesondere einen Evakuierungsvorgang, also den Zeitraum, in dem ein zu evakuierender Bereich von einem Ausgangsdruck, beispielsweise atmosphärischem Druck, auf einen gewünschten Druck, nämlich einen Vakuumdruck, reduziert wird. Hierbei ändert sich der Druck laufend. Bei Vakuumpumpen kommt häufig hinzu, dass der Druck pulsiert. Dies ist je nach zugrundeliegendem Pumpprinzip mehr oder weniger stark ausgeprägt und gilt besonders für den Fall, dass das Rückschlagventil unmittelbar mit einem Pumpraum einer Vakuumpumpe verbunden ist.

Es ist eine Aufgabe eine Scrollpumpe mit Rückschlagventil der vorstehend genannten Art bereitzustellen, welches im Betrieb eine besonders geringe Schallemission aufweist.

Diese Aufgabe wird durch ein Rückschlagventil mit den vorstehend genannten Merkmalen gelöst, welches zusätzlich ein Masseelement umfasst ist, welches mit dem Schließelement verbunden ist.

Das Schließelement ist aufgrund der Verbindung zusammen mit dem Masseelement beweglich. Durch das zusätzliche Masseelement ist die Gesamtmasse der beweglichen Baugruppe aus Schließelement und Masseelement erhöht. Entsprechend ist die Trägheit erhöht. Dies führt dazu, dass das Schließelement bei gegebenen Druckverhältnissen lediglich geringere Geschwindigkeiten annimmt und in der Folge auch beim Anschlagen an den Dichtungssitz eine geringere Geschwindigkeit aufweist. Somit ergibt sich eine geringere Schallemission.

Zudem wird dieser technische Effekt mit äußerst einfachen Mitteln erreicht. Ein Masseelement kann letztlich eine beliebige Form aufweisen und lässt sich somit einfach herstellen.

Das Masseelement ist von dem Schließelement grundsätzlich separat ausgeführt, auch wenn es mit diesem verbunden ist. Dies bedeutet, dass das Schließelement und das Masseelement separat als unterschiedliche Teile hergestellt werden und anschließend miteinander verbunden werden. Dabei kommt grundsätzlich auch eine stoffschlüssige Verbindung, wie beispielsweise eine Schweißverbindung, in Betracht.

Das Masseelement dient dem Zweck, die Gesamtmasse der Baugruppe aus Schließelement und Masseelement zu erhöhen. So ist es etwa vorteilhaft, wenn das Masseelement wenigstens die gleiche Masse, also das gleiche Gewicht aufweist, wie das Schließelement. Besonders vorteilhaft ist es, wenn das Masseelement wenigstens die 1,5-fache Masse, weiter bevorzugt wenigstens die doppelte Masse, im Vergleich zu dem Schließelement aufweist. Das Schließelement weist grundsätzlich eine Masse ms auf, die z.B. wenigstens 1,5 g, bevorzugt wenigstens 2,0 g und/oder höchstens 3,0 g, bevorzugt höchstens 2,5 g betragen kann. Das Masseelement weist grundsätzlich eine Masse $m_M$ auf, die bevorzugt wenigstens 2,0 g, besonders bevorzugt wenigstens 3,0 g, und/oder höchstens 6,0 g, besonders bevorzugt höchstens 4,0 g betragen kann.

Durch das zusätzliche Masseelement ist die vorteilhafte Möglichkeit eröffnet, dass das Masseelement und das Schließelement aus unterschiedlichen Materialen hergestellt sind. Somit ist es möglich, dass die Materialien der beiden Elemente jeweils gezielt im Hinblick auf die Aufgabe des betreffenden Elements ausgewählt werden können. So kann zum Beispiel für das Schließelement ein Material ausgewählt werden, welches in Kooperation mit einem Dichtungssitz eine hohe Dichtigkeit erlaubt und dabei insbesondere einfach herstellbar ist. Das Material des Masseelements kann hingegen insbesondere nach seiner Dichte ausgewählt werden, da das Masseelement möglichst schwer sein soll.

Bei einer bevorzugten Ausführungsform weisen das Masseelement und das Schließelement unterschiedliche Materialen auf, wobei das Material des Masseelements eine höhere Dichte aufweist als das Material des Schließelements. Grundsätzlich können die Elemente, insoweit davon die Rede ist, dass sie ein Material "aufweisen", auch aus diesem Material hergestellt sein und/oder ausschließlich das Material aufweisen.

Besonders bevorzugt sind Ausführungsformen, bei denen das Material des Masseelements eine Dichte aufweist, die wenigstens doppelt so hoch, weiter bevorzugt wenigstens dreimal so hoch, ist, wie die Dichte des Materials des Schließelements.

Das Schließelement kann zum Beispiel aus Kunststoff hergestellt werden. Damit ist es einfach herstellbar, wobei allerdings eine gute Dichtigkeit erreicht werden kann. Grundsätzlich kann das Schließelement aber auch zum Beispiel aus Metall hergestellt werden. Gemäß einer besonders vorteilhaften Ausführungsform handelt es sich bei dem Material des Schließelements um Fluorkautschuk bzw. FKM.

Das Masseelement kann bevorzugt aus Metall hergestellt sein. Besonders eignet sich Stahl, da dieser eine relativ hohe Dichte aufweist, kostengünstig und gut verfügbar ist sowie einfach bearbeitbar ist. Das Masseelement kann aber beispielsweise ebenfalls aus Kunststoff hergestellt sein, bevorzugt aus einem Kunststoff mit hoher Dichte.

Der Dichtungssitz kann beispielsweise aus Metall oder auch aus Kunststoff hergestellt sein.

Gemäß einer Weiterbildung ist vorgesehen, dass das Masseelement mit dem Schließelement fest verbunden ist. Somit sind das Schließelement und das Masseelement ausschließlich gemeinsam und gleichförmig bewegbar. Dies erlaubt einerseits einen einfachen Aufbau und andererseits eine wirksame Schallreduzierung.

Alternativ zu einer festen Verbindung kann aber zum Beispiel auch eine elastische und/oder eine dämpfende Verbindung vorgesehen sein. So kann eine weitere Geschwindigkeitsreduzierung des Schließelements erreicht werden. Das Masseelement wirkt dabei wie ein Tilger.

Grundsätzlich ist es für den Fall, dass eine Feder vorgesehen ist, welche das Schließelement gegen den Dichtungssitz vorspannt, bevorzugt, wenn das Masseelement unabhängig von der Feder mit dem Schließelement verbunden ist. Die Verbindung ist also insbesondere nicht durch die Feder selbst gebildet.

Das Masseelement kann mit dem Schließelement beispielsweise durch eine kraftschlüssige, eine formschlüssige und/oder eine stoffschlüssige Verbindung verbunden sein. Die Verbindung kann grundsätzlich lösbar oder unlösbar sein.

Beispielhafte Ausführungsformen umfassen, dass das Masseelement mit dem Schließelement durch eine Schraubverbindung, eine Rastverbindung, eine Pressverbindung, durch Widerhaken und/oder eine Verkantung verbunden ist. Einfache Lösungen umfassen zum Beispiel, dass das Masseelement in das Schließelement eingeschraubt oder eingesteckt ist, oder umgekehrt.

Das Schließelement kann beispielsweise mittels einer Feder gegen den Dichtungssitz vorgespannt sein. Bei der Feder kann es sich bevorzugt um eine Schraubendruckfeder handeln. Die Feder weist insbesondere eine Federkonstante k auf, die bevorzugt wenigstens 0,15 N/mm, weiter bevorzugt wenigstens 0,2 N/mm, und/oder höchstens 4 N/mm, weiter bevorzugt höchstens 3,0 N/mm, beträgt. Die Feder kann beispielsweise aus Stahl hergestellt sein.

Wenn die Baugruppe aus Masseelement und Schließelement mittels einer Feder gegen den Dichtungssitz vorgespannt ist, bildet diese Baugruppe zusammen mit der Feder ein schwingungsfähiges System, wobei die Baugruppe eine bewegliche Masse bildet. Die Bewegungsgleichung lautet:

$$F_m(t) + F_D(t) + F_F(t) = F_{ext}(t) \quad (1)$$

Dabei bezeichnet $F_{ext}$ die Anregungskraft. Diese ist hier durch die Druckdifferenz über das Ventil in Bezug auf die Querschnittsfläche definiert. $F_F$ bezeichnet die Rückstellkraft der Feder und ist im einfachsten Fall proportional zur Auslenkung. $F_D$ bezeichnet die Dämpfungskraft, die insbesondere proportional zur Geschwindigkeit der Auslenkung ist. Im einfachsten Fall wird damit eine dem System inhärente Dämpfung erfasst, zum Beispiel eine Dämpfung, die aus der Reibung zwischen Schließelement und/oder Masseelement einerseits und dem das Ventil durchströmenden Fluid andererseits resultiert. Eine reale Feder weist ebenfalls eine gewisse inhärente Dämpfung auf. Die dem System inhärenten Dämpfungen sind aber häufig klein und können somit zumindest bei groben Berechnungen vernachlässigt werden. Grundsätzlich ist es ferner denkbar, dass ein Dämpfungselement zur Dämpfung von Masse- und Schließelement vorgesehen ist. Schließlich bezeichnet $F_M$ alle weiteren auf die Masse ausgeübten Kräfte. Im Rückschlagventil sind aber typischerweise keine weiteren Kräfte wirksam, sodass auch dieser Term in den Berechnungen entfallen kann.

Die Masse des schwingungsfähigen Systems kann allerdings nicht frei schwingen, da der Dichtungssitz einen Anschlag im Bewegungsweg der Masse bildet.

Was die Anregungskraft bzw. die Druckdifferenz über das Ventil betrifft, so ist diese in der Realität nicht sinusförmig, sondern abhängig vom konkreten Gerät, welches mit dem Rückschlagventil ausgestattet ist, sowie vom Betriebszustand des Geräts. Eine klassische Berechnung ist damit nicht möglich, die Bewegungsdifferenzialgleichung ist nicht lösbar. So sind insbesondere für die klassische Lösung der Differenzialgleichungen zwei Terme nicht bekannt, nämlich der zeitliche Verlauf der Anregungskraft sowie die Dämpfung, zum Beispiel die Dämpfung durch Gasreibung.

Gleichwohl können gewisse Zusammenhänge auch aus bekannten Lösungen der Differenzialgleichung für ein frei schwingendes System abgeleitet werden.

Was das zugrunde liegende Problem der Schallemissionen betrifft, so können insbesondere die folgenden Annahmen getroffen werden: Die Lautstärke korreliert mit der Auslenkung der Masse und mit ihrer Geschwindigkeit. Im Rahmen der Erfindung ist es somit ein Ziel, diese beiden Größen zu beeinflussen, nämlich zu verkleinern.

Der in Formel (1) dargelegte Zusammenhang lässt sich somit durch die folgende Differenzialgleichung abbilden:

$$\ddot{x} + \frac{d}{m}\dot{x} + \frac{k}{m}x = F_{ext}(t) \qquad (2)$$

Dabei ist m die bewegliche Masse $m = m_S + m_M$, also die Summe der Massen von Masseelement ms und Schließelement $m_M$, k ist die Federkonstante, d ist die Dämpfungskonstante und $\Omega$ ist die Anregungsfrequenz.

Nachfolgend wird die Dämpfung vernachlässigt, wobei aber ähnliche Zusammenhänge für den Fall mit Dämpfung demonstrierbar sind. Insbesondere gilt dies für den Fall einer geringen Dämpfung, wie sie im Kontext eines Rückschlagventils erwartet werden können, vor allem wenn das das Rückschlagventil durchströmende Medium gasförmig ist. Ferner gilt dies in besonderem Maße in einem Vakuumgerät, da hier meist Drücke von unter 1 atm vorliegen.

In Formel (2) beträgt unter Vernachlässigung der Dämpfung das Quadrat der Eigenfrequenz

$$\omega_0{}^2 = \frac{k}{m} \qquad (3)$$

und das Frequenzverhältnis

$$\eta = \frac{\Omega}{\omega_0} = \frac{\Omega}{\sqrt{k}}\sqrt{m} \qquad (4)$$

sowie die Vergrößerungsfunktion

$$V_{Amp} = \frac{1}{|1-\eta^2|} = \frac{1}{\left|1-\frac{\Omega^2}{k}m\right|} \qquad (5)$$

An Formel (5) lässt sich ablesen, dass eine große Masse m und eine kleine Federkonstante k sowie ein kleines Verhältnis k/m bewirken, dass die Vergrößerung der Auslenkungsamplitude klein ist. Dies gilt für den überkritischen Bereich, d. h. wenn

$$1 < \frac{\Omega^2}{k}m \qquad (6)$$

bzw. wenn

$$\frac{k}{m} < \Omega^2 \qquad (7)$$

Dabei kann $\Omega$ unbekannt oder schwierig zu bestimmen sein. Gleichwohl können vorteilhafte Werte für k/m abgeschätzt werden, bei denen mit hoher Wahrscheinlichkeit ein überkritischer Bereich eingehalten wird.

Vor diesem Hintergrund hat es sich für reale Systeme als besonders vorteilhaft gezeigt, wenn das Masseelement und das Schließelement zusammen eine Masse m aufweisen, wobei die Feder eine Federkonstante k aufweist und wobei das Verhältnis k/m höchstens 110.000 $s^{-2}$, bevorzugt höchstens 70.000 $s^{-2}$, besonders bevorzugt höchstens 50.000 $s^{-2}$, beträgt. Insbesondere haben sich diese Wertebereiche für Vakuumgeräte und besonders bevorzugt für Vakuumpumpen, insbesondere Scrollpumpen, und Kompressoren als vorteilhaft erwiesen. Ferner gelten die Wertebereiche mit besonderem Vorteil für den Fall, dass das Rückschlagventil zur Steuerung der Strömung durch ein Gasballastventil angeordnet ist.

Aus dem Vorstehenden ergibt es sich ferner, dass es vorteilhaft ist, wenn das Masseelement und das Schließelement zusammen mit der Feder ein schwingungsfähiges System bilden, wobei das System derart dimensioniert ist, dass es im Betrieb des Ventils im überkritischen Bereich betrieben wird.

Mit weiterem Vorteil kann es vorgesehen sein, dass das Schließelement und/oder der Dichtungssitz eine sphärische oder kegelförmige Anlagefläche zur Anlage mit dem Dichtungssitz bzw. dem Schließelement aufweist. Was den Dichtungssitz betrifft, so versteht es sich, dass die Anlagefläche ringförmig ist und den Durchgang umschließt. Was das Schließelement betrifft, so ist der Flächenbereich, der im Sperrzustand unmittelbar in Anlage mit der korrespondierenden Fläche des Dichtungssitzes steht, ebenfalls ringförmig. Allgemein kann bei dem Schließelement aber eine dem Dichtungssitz zugewandte Fläche sphärisch und dabei insbesondere im Querschnitt geschlossen und/oder nicht ringförmig sein.

Eine Weiterbildung sieht vor, dass das Schließelement eine Anlagefläche zur Anlage mit dem Dichtungssitz aufweist und das Masseelement auf einer der Anlagefläche abgewandten Seite des Schließelements angeordnet und/oder mit diesem verbunden ist.

Gemäß einer weiteren Ausführungsform kann das Masseelement im Innenbereich einer Feder, insbesondere einer Schraubenfeder, angeordnet sein. Dies erlaubt eine besonders kompakte Anordnung.

Das Masseelement kann zum Beispiel einen Verbindungsabschnitt und/oder einen Masseabschnitt aufweisen. Der Masseabschnitt kann bevorzugt wenigstens eine doppelt so hohe Masse aufweisen, wie der Verbindungsabschnitt. Der Verbindungsabschnitt und der Masseabschnitt können beispielsweise voneinander durch einen Absatz getrennt sein. Der Verbindungsabschnitt kann sich beispielsweise in eine Ausnehmung des Schließelements hinein erstrecken. So kann der Verbindungsabschnitt beispielsweise in die Ausnehmung eingeschraubt oder in dieser eingesteckt sein.

Grundsätzlich kann ein Verbindungsabschnitt des Masseelements und/oder des Schließelements beispielsweise wenigstens eine Erhebung aufweisen, die als Widerhaken wirkt. Bevorzugt können mehrere solcher Erhebungen vorgesehen sein. Die wenigstens eine Erhebung kann bevorzugt umlaufend ausgebildet sein.

Grundsätzlich kann das Masseelement ein einteiliges Element sein oder aus mehreren Bauteilen bestehen.

Wie bereits angedeutet, bewirkt das zusätzliche Masseelement eine Erhöhung der Masse und damit der Trägheit der im Rückschlagventil beweglichen Baugruppe. Diese Trägheit wirkt sich auch auf den Gasstrom aus, also die Menge an Gas, die das Rückschlagventil bei gegebenen Druckverhältnissen pro Zeiteinheit passieren kann. Dieser Zusammenhang kann auch zu dem Zweck ausgenutzt werden, den Gasstrom so einzustellen, wie es gewünscht ist. In diesem Zusammenhang ist anzumerken, dass der Gasstrom auch in erheblichem Maße von der Kraft einer gegebenenfalls vorhandenen Feder im Rückschlagventil abhängig ist.

Vorteilhafter Weise kann die Scrollpumpe ein Gasballastventil aufweisen und mit einem Rückschlagventil nach vorstehend beschriebener Art ausgestattet sein, wobei das Rückschlagventil insbesondere zur Steuerung der Strömung durch das Gasballastventil angeordnet ist. D.h. das Rückschlagventil erlaubt den Gasstrom durch das Gasballastventil in einer Richtung und sperrt den Gasstrom in der entgegengesetzten Richtung. Bevorzugt ist dabei das Rückschlagventil derart angeordnet, dass ein Austreten von Gas aus der Pumpe, insbesondere aus einem Pumpraum, verhindert wird, wohingegen ein Einleiten von Ballastgas möglich ist.

Das Rückschlagventil kann beispielsweise in das Gasballastventil integriert sein oder diesem vor- oder nachgeschaltet sein.

Die Scrollpumpe umfasst bevorzugt einen Pumpenkörper, dessen Innenseite einen Pumpraum begrenzt und an dessen Außenseite ein Gasballastventil zur Steuerung der Zufuhr eines Ballastgases in den Pumpraum angeordnet ist.

Vorgeschlagen wird ferner eine erfindungsgemäße Scrollpumpe mit einem Gasballastventil und einem Rückschlagventil, insbesondere einem solchen nach vorstehend beschriebener Art, wobei das Rückschlagventil zur Steuerung der Strömung durch das Gasballastventil angeordnet ist, wobei das Rückschlagventil einen Durchgang für ein Fluid sowie ein bewegliches Schließelement und einen Dichtungssitz umfasst, wobei das Schließelement und der Dichtungssitz derart korrespondierend ausgebildet sind, dass das Schließelement den Durchgang sperrt, wenn es sich in Anlage mit dem Dichtungssitz befindet, wobei das Rückschlagventil eine Feder mit einer Federkontante k aufweist, welche das Schließelement gegen den Dichtungssitz vorspannt, wobei das Rückschlagventil eine bewegliche Masse m aufweist, welche zumindest teilweise vom Schließelement gebildet ist, und wobei ein von der beweglichen Masse und der Feder gebildetes, schwingungsfähiges System so dimensioniert ist, dass es im überkritischen Bereich betrieben wird, und/oder wobei $k/m \leq 110.000\ s^{-2}$.

Ein tragender Gedanke besteht dabei darin, dass die im Rückschlagventil bewegliche Masse m besonders groß sein soll, insbesondere in Bezug auf eine Federkonstante k, sofern eine Feder vorhanden ist. Dies bewirkt mit einfachen Mitteln eine vorteilhafte Reduzierung der Schallemission im Betrieb. Was das Rückschlagventil im Allgemeinen betrifft, wird dieser Gedanke - wie oben beschrieben - durch ein zusätzliches Masseelement realisiert. Grundsätzlich kann aber auch das Schließelement selbst eine hohe Masse aufweisen, um eine Schallemission zu reduzieren. So hat es sich insbesondere im konkreten Kontext einer Vakuumpumpe mit Gasballastventil als vorteilhaft gezeigt, wenn $k/m \leq 110.000\ s^{-2}$, bevorzugt $k/m \leq 70.000\ s^{-2}$, besonders bevorzugt $k/m \leq 50.000\ s^{-2}$. Dies bildet somit im Kontext der erfindungsgemäßen Scrollpumpe mit Rückschlagventil die Realisierung des tragenden Gedankens, dass eine hohe Masse, insbesondere in Bezug auf die Federkonstante k angestrebt werden soll.

Die Herstellung der Scrollpumpe kann auch zusätzlich umfassen: ein Verfahren zur Herstellung eines Rückschlagventils nach vorstehend beschriebener Art, wobei das Masseelement und das Schließelement separat voneinander hergestellt werden und anschließend verbunden werden.

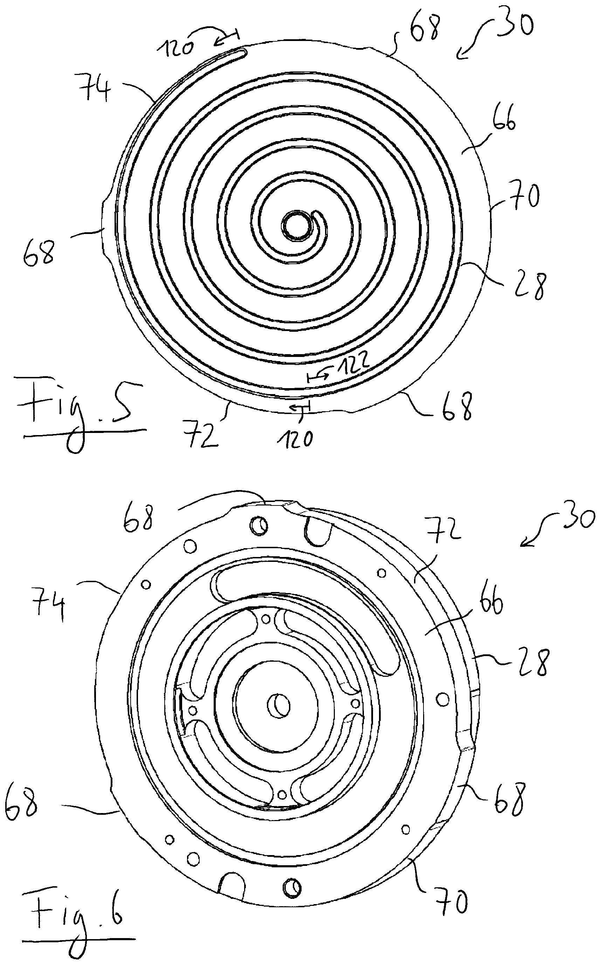

Die Erfindung wird nachfolgend lediglich beispielhaft anhand der schematischen Zeichnung erläutert. Dabei ist die Erfindung vor allem in den Fig. 5 bis 7 veranschaulicht und in den diesbezüglichen Beschreibungsteilen näher erläutert. Die weiteren Figuren erläutern besondere Aspekte und vorteilhafte Weiterbildungen.

Fig. 1 zeigt eine Scrollpumpe in einer Schnittansicht.

Fig. 2 zeigt ein Elektronikgehäuse der Scrollpumpe.

Fig. 3 zeigt die Scrollpumpe in perspektivischer Ansicht, wobei ausgewählte Elemente freigestellt sind.

Fig. 4 zeigt einen in die Pumpe integrierten Drucksensor.

Fig. 5 zeigt ein bewegliches Spiralbauteil der Pumpe.

Fig. 6 zeigt das Spiralbauteil von einer anderen, der in Fig. 5 sichtbaren Seite gegenüberliegenden Seite.

Fig. 7 zeigt eine Einspannvorrichtung für ein Spiralbauteil.

Fig. 8 und 9 zeigen jeweils eine Exzenterwelle mit einem Ausgleichsgewicht von unterschiedlichen Scrollpumpen.

Fig. 10 zeigt ein Gasballastventil mit einem Betätigungsgriff in perspektivischer Ansicht.

Fig. 11 zeigt das Ventil der Fig. 10 in einer Schnittansicht.

Fig. 12 zeigt einen Teilbereich des Spiralbauteils der Fig. 5 und 6.

Fig. 13 zeigt einen Querschnitt des Spiralbauteils durch die Spiralwand in einem äußeren Endbereich.

Fig. 14 zeigt eine Luftleithaube der Scrollpumpe der Fig. 1 in perspektivischer Ansicht.

Fig. 15 zeigt ein Abdrückgewinde in einer Schnittdarstellung.

Fig. 16 zeigt ein Gasballastventil in einer Draufsicht.

Fig. 17 zeigt das Ventil der Fig. 16 in einer Schnittansicht mit Schnittebene entlang der in Fig. 16 gekennzeichneten Linie B:B.

Fig. 18 zeigt eine Ausführungsform eines Masseelements.

Fig. 19 zeigt einen Teilausschnitt X der Fig. 18 in vergrößerter Ansicht.

Fig. 20 illustriert in einer derjenigen der Fig. 19 entsprechenden Ansicht eine alternative Ausführungsform eines Masseelements.

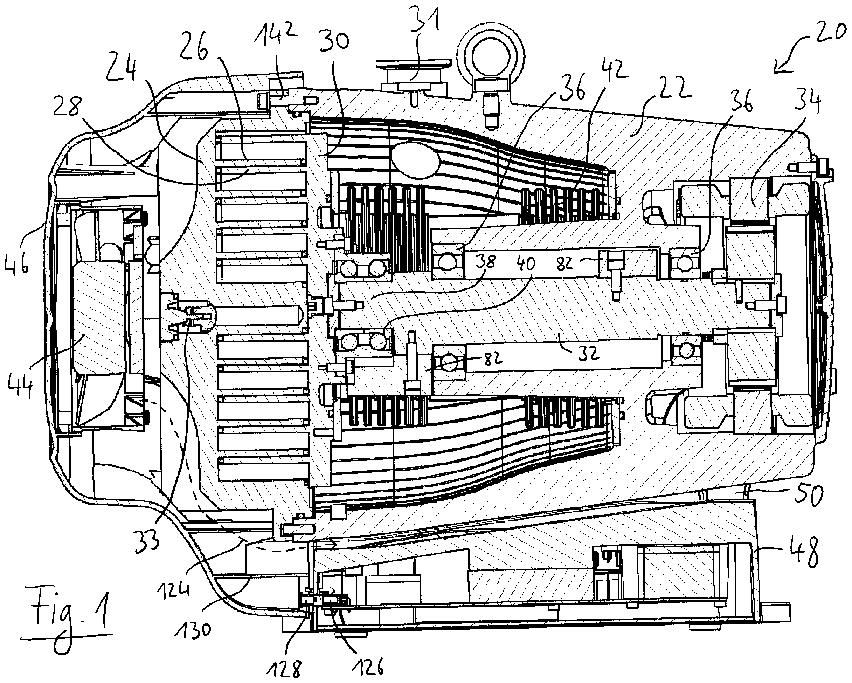

Die Fig. 1 zeigt eine als Scrollpumpe 20 ausgebildete Vakuumpumpe. Diese umfasst ein erstes Gehäuseelement 22 und ein zweites Gehäuseelement 24, wobei das zweite Gehäuseelement 24 eine pumpaktive Struktur aufweist, nämlich eine Spiralwand 26. Das zweite Gehäuseelement 24 bildet also ein feststehendes Spiralbauteil der Scrollpumpe 20. Die Spiralwand 26 wirkt mit einer Spiralwand 28 eines beweglichen Spiralbauteils 30 zusammen, wobei das bewegliche Spiralbauteil 30 zum Erzeugen einer Pumpwirkung über eine Exzenterwelle 32 exzentrisch erregt wird. Dabei wird ein zu pumpendes Gas von einem Einlass 31, welcher im ersten Gehäuseelement 22 definiert ist, zu einem Auslass 33 gefördert, welcher im zweiten Gehäuseelement 24 definiert ist.

Die Exzenterwelle 32 ist durch einen Motor 34 angetrieben und durch zwei Wälzlager 36 gelagert. Sie umfasst einen exzentrisch zu ihrer Rotationsachse angeordneten Exzenterzapfen 38, der über ein weiteres Wälzlager 40 seine exzentrische Auslenkung an das bewegliche Spiralbauteil 30 überträgt. An dem beweglichen Spiralbauteil 30 ist zwecks Abdichtung außerdem ein in Fig. 1 linksseitiges Ende eines Wellbalgs 42 befestigt, dessen rechtsseitiges Ende an dem ersten Gehäuseelement 22 befestigt ist. Das linksseitige Ende des Wellbalgs 42 folgt der Auslenkung des beweglichen Spiralbauteils 30.

Die Scrollpumpe 20 umfasst einen Lüfter 44 zur Erzeugung eines Kühlluftstromes. Für diesen Kühlluftstrom ist eine Luftleithaube 46 vorgesehen, an der der Lüfter 44 auch befestigt ist. Die Luftleithaube 46 und die Gehäuseelemente 22 und 24 sind derart geformt, dass der Kühlluftstrom im Wesentlichen das gesamte Pumpengehäuse umströmt und somit eine gute Kühlleistung erreicht.

Die Scrollpumpe 20 umfasst ferner ein Elektronikgehäuse 48, in dem eine Steuerungseinrichtung und Leistungselektronikkomponenten zum Antrieb des Motors 34 angeordnet sind. Das Elektronikgehäuse 48 bildet außerdem einen Standfuß der Pumpe 20. Zwischen dem Elektronikgehäuse 48 und dem ersten Gehäuseelement 22 ist ein Kanal 50 sichtbar, durch den ein vom Lüfter 44 erzeugter Luftstrom am ersten Gehäuseelement 22 und auch am Elektronikgehäuse 48 entlanggeführt ist, sodass beide wirksam gekühlt werden.

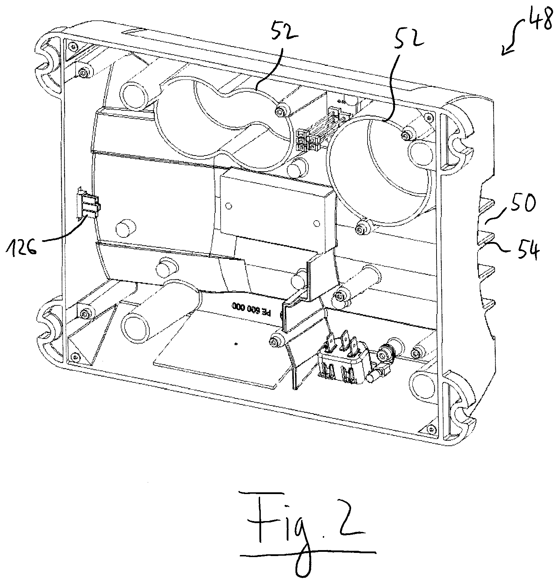

Das Elektronikgehäuse 48 ist in Fig. 2 näher veranschaulicht. Es umfasst mehrere gesonderte Kammern 52. In diesen Kammern 52 können Elektronikkomponenten vergossen werden und sind somit vorteilhaft abgeschirmt. Bevorzugt kann beim Vergießen der Elektronikkomponenten eine möglichst minimale Menge des Vergussmaterials verwendet werden. Zum Beispiel kann zuerst das Vergussmaterial in die Kammer 52 eingebracht werden und anschließend die Elektronikkomponente hineingedrückt werden. Vorzugsweise können die Kammern 52 so ausgeführt sein, dass verschiedene Varianten der Elektronikkomponenten, insbesondere verschiedene Bestückungsvarianten einer Platine, in dem Elektronikgehäuse 48 angeordnet werden können und/oder vergossen werden können. Für bestimmte Varianten können dabei auch einzelne Kammern 52 leer bleiben, also keine Elektronikkomponente aufweisen. So kann auf einfache Weise ein sogenanntes Baukastensystem für verschiedene Pumpentypen realisiert werden. Das Vergussmaterial kann insbesondere wärmeleitend und/oder elektrisch isolierende ausgebildet sein.

An einer in Bezug auf Fig. 2 hinteren Seite des Elektronikgehäuses 48 sind mehrere Wände oder Rippen 54 ausgebildet, die mehrere Kanäle 50 zum Leiten eines Kühlluftstromes definieren. Die Kammern 52 ermöglichen außerdem eine besonders gute Wärmeabfuhr von den in ihnen angeordneten Elektronikkomponenten, insbesondere in Verbindung mit einem wärmeleitenden Vergussmaterial, und hin zu den Rippen 54. Die Elektronikkomponenten lassen sich somit besonders wirksam kühlen und ihre Lebensdauer wird verbessert.

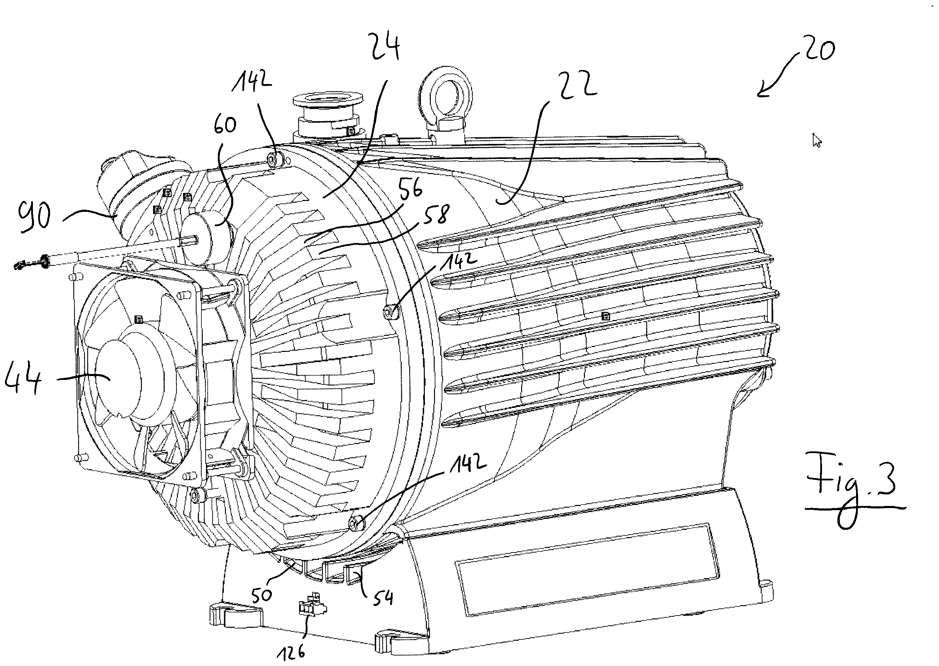

In Fig. 3 ist die Scrollpumpe 20 als Ganzes perspektivisch dargestellt, wobei jedoch die Luftleithaube 46 ausgeblendet ist, sodass insbesondere das feststehende Spiralbauteil 24 und der Lüfter 44 sichtbar sind. An dem feststehenden Spiralbauteil 24 sind mehrere, sternförmig angeordnete Ausnehmungen 56 vorgesehen, die jeweils zwischen den Ausnehmungen 56 angeordnete Rippen 58 definieren. Der vom Lüfter 44 erzeugte Kühlluftstrom führt durch die Ausnehmungen 56 und vorbei an den Rippen 58 und kühlt so das feststehende Spiralbauteil 24 besonders wirksam. Dabei umströmt der Kühlluftstrom zunächst das feststehende Spiralbauteil 24 und erst anschließend das erste Gehäuseelement 22 bzw. das Elektronikgehäuse 48. Diese Anordnung ist besonders vorteilhaft, da der pumpaktive Bereich der Pumpe 20 aufgrund der Kompression im Betrieb eine hohe Wärmeentwicklung aufweist und daher hier vorrangig gekühlt wird.

Die Pumpe 20 umfasst einen in diese integrierten Drucksensor 60. Dieser ist innerhalb der Luftleithaube 46 angeordnet und in das feststehende Spiralbauteil 24 eingeschraubt. Der Drucksensor 60 ist über eine nur teilweise dargestellte Kabelverbindung mit dem Elektronikgehäuse 48 und einer darin angeordneten Steuerungseinrichtung verbunden. Dabei ist der Drucksensor 60 in die Steuerung der Scrollpumpe 20 eingebunden. Zum Beispiel kann der Motor 34, der in Fig. 1 sichtbar ist, in Abhängigkeit von einem vom Drucksensor 60 gemessenen Druck angesteuert werden. Z.B. beim Einsatz der Pumpe 20 in einem Vakuumsystem als Vorpumpe für eine Hochvakuumpumpe kann beispielsweise die Hochvakuumpumpe nur dann eingeschaltet werden, wenn der Drucksensor 60 einen ausreichend niedrigen Druck misst. So kann die Hochvakuumpumpe vor einer Beschädigung geschützt werden.

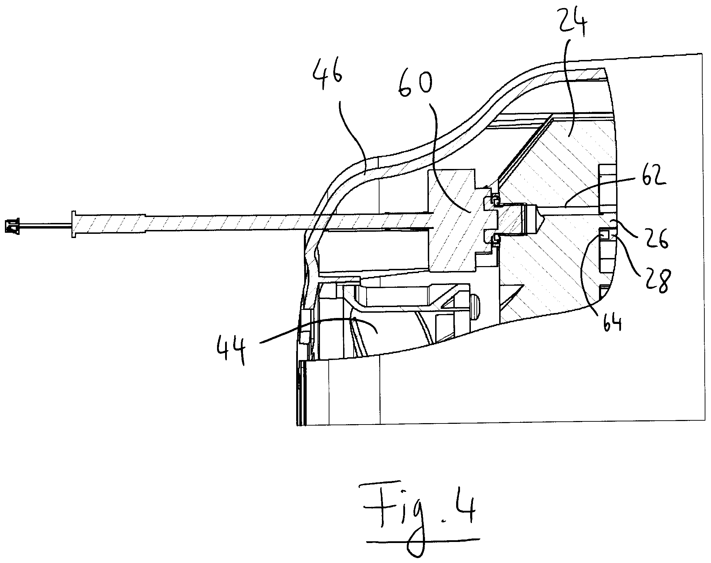

Fig. 4 zeigt den Drucksensor 60 und seine Anordnung am feststehenden Spiralbauteil 24 in einer Querschnittsdarstellung. Für den Drucksensor 60 ist ein Kanal 62 vorgesehen, der hier in einen nicht pumpaktiven Außenbereich zwischen den Spiralwänden 26 und 28 der feststehenden bzw. beweglichen Spiralbauteile 24 und 30 mündet. Somit misst der Drucksensor einen Ansaugdruck der Pumpe. Alternativ oder zusätzlich kann beispielsweise auch ein Druck zwischen den Spiralwänden 26 und 28 in einem pumpaktiven Bereich gemessen werden. Je nach Position des Drucksensors 60 bzw. des Kanals 62 können also zum Beispiel auch Zwischendrücke gemessen werden.

Der Drucksensor 60 erlaubt, zum Beispiel über die Ermittlung einer Kompression, insbesondere eine Erkennung eines Verschleißzustandes der pumpaktiven Komponenten, insbesondere eines auch als Tip Seal bezeichneten Dichteelements 64. Weiterhin kann der gemessene Ansaugdruck auch zu einer Regelung der Pumpe verwendet werden (u. a. Pumpendrehzahl). So kann beispielsweise ein Ansaugdruck softwareseitig vorgegeben werden und durch Variation der Pumpendrehzahl ein Ansaugdruck eingestellt werden. Auch ist denkbar, dass abhängig vom gemessenen Druck ein verschleißbedingter Druckanstieg durch Drehzahlsteigerung kompensiert werden kann. Somit kann ein Tip Seal-Wechsel verschoben werden bzw. größere Wechselintervalle realisiert werden. Die Daten des Drucksensors 60 können also generell z.B. zur Verschleißbestimmung, zur situativen Steuerung der Pumpe, zur Prozesskontrolle, etc. verwendet werden.

Der Drucksensor 60 kann zum Beispiel optional vorgesehen sein. Anstelle des Drucksensors 60 kann beispielsweise ein Blindstopfen zum Verschließen des Kanals 62 vorgesehen sein. Ein Drucksensor 60 kann dann beispielsweise bei Bedarf nachgerüstet werden. Insbesondere im Hinblick auf die Nachrüstung, aber auch generell vorteilhaft, kann vorgesehen sein, dass der Drucksensor 60 beim Anschließen an die Steuerungseinrichtung der Pumpe 20 automatisch erkannt wird.

Der Drucksensor 60 ist im Kühlluftstrom des Lüfters 44 angeordnet. Hierdurch wird auch er vorteilhaft gekühlt. Dies hat außerdem zur Folge, dass keine besonderen Maßnahmen für eine höhere Temperaturbeständigkeit des Drucksensors 60 zu treffen sind und folglich ein kostengünstiger Sensor eingesetzt werden kann.

Außerdem ist der Drucksensor 60 insbesondere derart angeordnet, dass die äußeren Abmessungen der Pumpe 20 durch ihn nicht vergrößert sind und die Pumpe 20 folglich kompakt bleibt.

In den Fig. 5 und 6 ist das bewegliche Spiralbauteil 30 in verschiedenen Ansichten gezeigt. In Fig. 5 ist die spiralförmige Struktur der Spiralwand 28 besonders gut sichtbar. Neben der Spiralwand 28 umfasst das Spiralbauteil 30 eine Grundplatte 66, ausgehend von der sich die Spiralwand 28 erstreckt.

Eine der Spiralwand 28 abgewandte Seite der Grundplatte 66 ist in Fig. 6 sichtbar. An dieser Seite umfasst die Grundplatte unter anderem mehrere Befestigungsausnehmungen, etwa zur Befestigung des Lagers 40 und des Wellbalgs 42, die in Fig. 1 sichtbar sind.

Außen an der Grundplatte 66 sind drei über den Umfang der Grundplatte 66 beabstandete und gleichmäßig über den Umfang verteilte Haltevorsprünge 68 vorgesehen. Die Haltevorsprünge 68 erstrecken sich dabei radial nach außen. Die Haltevorsprünge 68 weisen insbesondere alle die gleiche radiale Höhe auf.

Zwischen zwei der Haltevorsprünge 68 erstreckt sich ein erster Zwischenabschnitt 70 des Umfangs der Grundplatte 66. Dieser erste Zwischenabschnitt 70 weist eine größere radiale Höhe auf als ein zweiter Zwischenabschnitt 72 und als ein dritter Zwischenabschnitt 74. Der erste Zwischenabschnitt 70 ist einem äußersten 120°-Abschnitt der Spiralwand 28 gegenüberliegend angeordnet.

Bei der Herstellung des beweglichen Spiralbauteils 30 werden bevorzugt die Grundplatte 66 und die Spiralwand 28 aus einem Vollmaterial gemeinsam spanend hergestellt, d. h. die Spiralwand 28 und die Grundplatte 66 sind einteilig ausgebildet.

Zum Beispiel bei einer Schlichtbearbeitung kann das Spiralbauteil 30 an den Haltevorsprüngen 68 direkt eingespannt sein. Im Rahmen ein und derselben Einspannung kann zum Beispiel auch die in Fig. 6 gezeigte Seite der Grundplatte 66 bearbeitet werden, insbesondere die Befestigungsausnehmungen eingebracht werden. Grundsätzlich kann im Rahmen dieser Einspannung auch die spanende Herstellung der Spiralwand 28 aus dem Vollmaterial erfolgen.

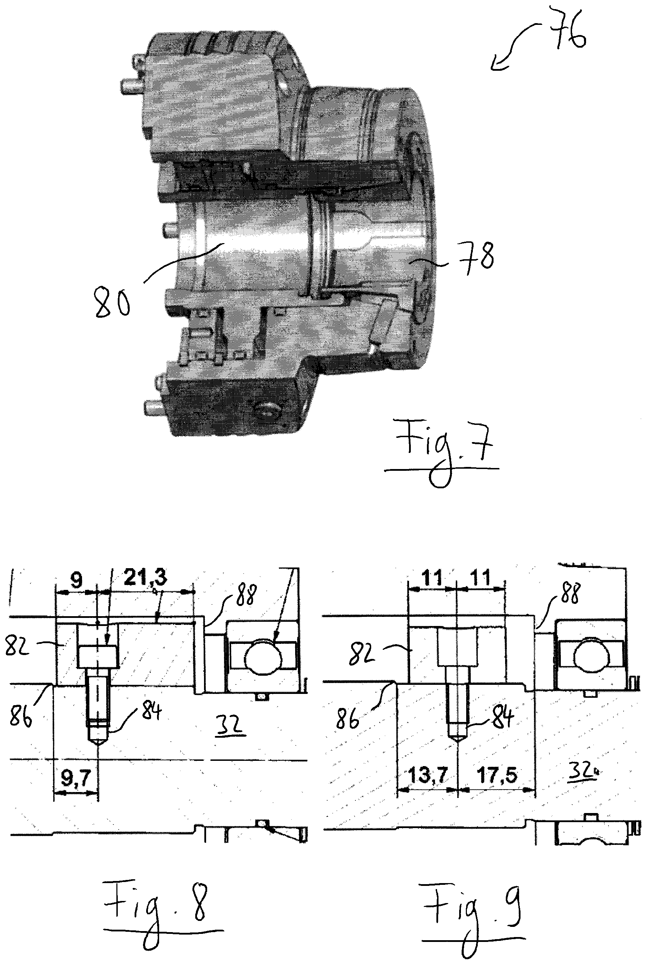

Das Spiralbauteil 30 kann zu diesem Zweck beispielsweise mit einer Einspannvorrichtung 76 eingespannt sein, wie sie in Fig. 7 gezeigt ist. Diese weist ein hydraulisches Dreibackenfutter 78 zur direkten Anlage an den drei Haltevorsprüngen 68 auf. Außerdem weist die Einspannvorrichtung 76 eine durchgehende Ausnehmung 80 auf, durch die ein Werkzeugzugang zu dem Spiralbauteil 30, insbesondere zu der in Fig. 6 gezeigten Seite desselben, ermöglicht ist. Somit können Bearbeitungsvorgänge von beiden Seiten während einer Einspannung erfolgen, insbesondere wenigstens eine Schlichtbearbeitung der Spiralwand 28 und ein Einbringen von Befestigungsausnehmungen.

Die Kontur der Haltevorsprünge 68 und der Spanndruck der Einspannvorrichtung 76 sind bevorzugt so gewählt, dass keine kritischen Verformungen des Spiralbauteils 30 stattfinden. Die drei Haltevorsprünge 68 sind bevorzugt so gewählt, dass die äußere Dimension, also der maximale Durchmesser des Spiralbauteils 30 nicht vergrößert werden. Somit kann zum einen Material und zum anderen Zerspanungsvolumen eingespart werden. Die Haltevorsprünge 68 sind insbesondere so ausgeführt und/oder an einer solchen Winkelposition angeordnet, dass die Zugänglichkeit der Verschraubung des Wellbalgs 42 gegeben ist. Die Anzahl der Verschraubungspunkte des Wellbalgs 42 ist bevorzugt ungleich der Anzahl der Haltevorsprünge 68 am beweglichen Spiralbauteil 30.

An der Exzenterwelle 32 der Fig. 1 sind zwei Ausgleichsgewichte 82 zum Ausgleich einer Unwucht des erregten Systems angebracht. Der Bereich des in Fig. 1 rechtsseitigen Ausgleichgewichts 82 ist in Fig. 8 vergrößert dargestellt. Das Ausgleichsgewicht 82 ist an der Exzenterwelle 32 festgeschraubt.

Ein ähnlicher Bildausschnitt ist in Fig. 9 für eine andere Scrollpumpe gezeigt, die bevorzugt derselben Baureihe der Pumpe 20 der Fig. 1 angehört. Die der Fig. 9 zugrunde liegende Pumpe weist insbesondere andere Dimensionen auf und benötigt daher ein anderes Ausgleichsgewicht 82.

Die Exzenterwellen 32, die Ausgleichsgewichte 82 und die Gehäuseelemente 22 sind so dimensioniert, dass an der jeweils gezeigten Befestigungsposition nur eine bestimmte Art der zwei gezeigten Arten von Ausgleichsgewichten 82 an der Exzenterwelle 32 montierbar ist.

Die Ausgleichsgewichte 82 sind in den Fig. 8 und 9 zusammen mit bestimmten Abmessungen des für sie vorgesehenen Bauraumes bemaßt, um zu verdeutlichen, dass das Ausgleichsgewicht 82 der Fig. 9 nicht an der Exzenterwelle 32 montierbar ist und umgekehrt. Es versteht sich, dass die angegebenen Maße rein beispielhaft genannt sind.

So beträgt in Fig. 8 ein Abstand zwischen einer Befestigungsbohrung 84 und einem Wellenabsatz 86 9,7 mm. Das Ausgleichsgewicht 82 der Fig. 8 ist in der entsprechenden Richtung kürzer ausgebildet, nämlich 9 mm lang, kann also problemlos montiert werden. Das Ausgleichsgewicht 82 der Fig. 9 weist jeweils gemessen von der Befestigungsbohrung eine Längserstreckung von 11 mm auf. Somit ist das Ausgleichsgewicht 82 der Fig. 9 nicht an der Exzenterwelle 32 der Fig. 8 montierbar, da der Wellenabsatz 86 mit dem Ausgleichsgewicht 82 bei einer versuchten Montage kollidiert bzw. da somit das Ausgleichsgewicht 82 der Fig. 9 nicht vollständig in Anlage mit der Exzenterwelle 82 der Fig. 8 gebracht werden kann. Dadurch, dass das Ausgleichsgewicht 82 der Fig. 9 in beiden bemaßten Dimensionen größer ist als der Abstand von Befestigungsbohrung 84 und Wellenabsatz 86 in Fig. 8, ist auch eine Montage in umgedrehter Richtung verhindert. Zudem verhindert die Dimension von 21,3 mm des Ausgleichsgewichts 82 der Fig. 8 eine umgedrehte und folglich falsche Montageausrichtung des ansonsten richtigen Ausgleichsgewichts 82.

In Fig. 9 beträgt ein Abstand in Längsrichtung zwischen der Befestigungsbohrung 84 und einer Gehäuseschulter 88 17,5 mm. Das Ausgleichsgewicht 82 der Fig. 8 mit seiner Erstreckung von 21,3 mm würde beim Einschieben der Exzenterwelle 32 der Fig. 9 mit der Gehäuseschulter 88 kollidieren, sodass keine vollständige Montage möglich wäre. Die falsche Montage ist zwar zunächst möglich, wird aber zuverlässig erkannt. Bei einer um die Achse der Befestigungsbohrung 84 verdrehten Montage des Ausgleichsgewicht 82 der Fig. 8 an der Exzenterwelle 32 der Fig. 9 würde die Erstreckung von 21,3 mm mit der Wellenschulter 86 kollidieren, die nur in einem Abstand von 13,7 mm von der Befestigungsbohrung 84 angeordnet ist.

Die Ausgleichsgewichte 82, insbesondere ein motorseitiges Ausgleichsgewicht 82, sind allgemein so ausgeführt, dass eine Verwechslung des Ausgleichsgewichts mit solchen anderer Baugrößen bei der Montage und/oder beim Service vermieden wird. Die Ausgleichsgewichte werden bevorzugt mittels Durchgangsschrauben befestigt. Ähnliche Ausgleichsgewichte verschiedener Pumpengrößen sind insbesondere so ausgeführt, dass aufgrund angrenzender Absätze auf der Welle, der Positionen von Gewinde und Durchgangsbohrung des Ausgleichsgewichts sowie von Absätzen innerhalb des Gehäuses eine Montage des falschen Ausgleichsgewichts verhindert wird.

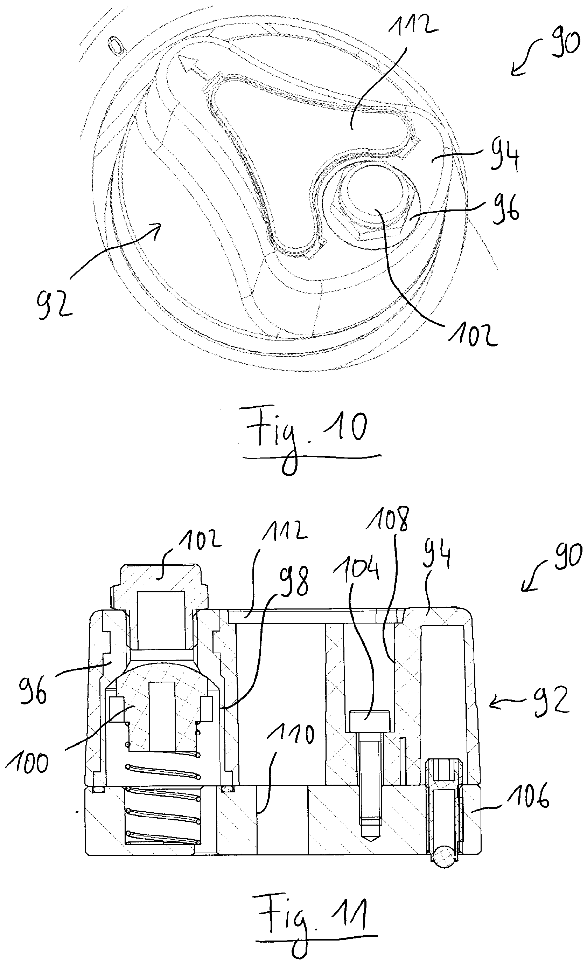

In den Fig. 10 und 11 ist ein Gasballastventil 90 der Scrollpumpe 20 gezeigt. Dieses ist auch in der Gesamtdarstellung der Pumpe 20 in Fig. 3 sichtbar und am feststehenden Spiralbauteil 24 angeordnet.

Das Gasballastventil 90 umfasst einen Betätigungsgriff 92. Dieser umfasst einen Kunststoffkörper 94 und ein Basiselement 96, welches bevorzugt aus Edelstahl hergestellt ist. Das Basiselement 96 umfasst eine durchgehende Bohrung 98, die einerseits zum Anschluss und Einleiten eines Ballastgases vorgesehen ist und andererseits ein Rückschlagventil 100 umfasst. Die Bohrung 98 ist außerdem in den Darstellungen mittels eines Stopfens 102 verschlossen. Anstelle des Stopfens 102 kann beispielsweise auch ein Filter vorgesehen sein, wobei das Ballastgas bevorzugt Luft sein kann und über den Filter insbesondere direkt in das Ventil 90 eintritt.

Der Betätigungsgriff 92 ist mit drei Befestigungsschrauben 104 an einem drehbaren Element 106 des Ventils 90 befestigt, die in einer jeweiligen Bohrung 108 angeordnet sind und von denen in der gewählten Schnittdarstellung der Fig. 11 nur eine sichtbar ist. Das drehbare Element 106 ist mit einer nicht dargestellten, durch eine Bohrung 110 verlaufende Befestigungsschraube am zweiten Gehäuseelement 24 drehbar befestigt.

Zur Betätigung des Ventils 90 wird ein manuell am Betätigungsgriff 92 angelegtes Drehmoment an das drehbare Element 106 übertragen und dieses somit gedreht. Somit gelangt die Bohrung 98 in Kommunikation mit einem Inneren des Gehäuses. Für das Ventil 90 sind dabei drei Schaltstellungen vorgesehen, nämlich die in Fig. 10 dargestellte, welche eine Sperrstellung ist, und jeweils eine nach rechts und nach links verdrehte Stellung, in denen die Bohrung 98 mit unterschiedlichen Bereichen des Inneren des Gehäuses in Kommunikation steht.

Die Bohrungen 108 und 110 sind durch einen Deckel 112 verschlossen. Die Dichtwirkung des Gasballastventiles 90 beruht auf axial verpressten O-Ringen. Bei Betätigung des Ventils 90 wird eine Relativbewegung auf die O-Ringe ausgeübt. Gelangen Verschmutzungen, wie etwa Partikel, an die Oberfläche eines O-Rings, so birgt dies die Gefahr eines frühzeitigen Ausfalls. Der Deckel 112 verhindert ein Eindringen von Verschmutzungen und ähnlichem an die Schrauben des Griffes 92.

Dieser Deckel 112 wird über eine Übermaßpassung dreier Zentrierelemente befestigt. Konkret weist der Deckel 112 für jede Bohrung 108 einen nicht dargestellten Einsteckzapfen auf, mit denen der Deckel 112 in den Bohrungen 108 gehalten ist. Die Bohrungen 108 und 110 sowie die darin angeordneten Befestigungsschrauben sind somit vor Verschmutzungen geschützt. Insbesondere bei der in der Bohrung 110 angeordneten, nicht dargestellten Befestigungsschraube, die eine Drehbewegung erlaubt, kann so ein Verschmutzungseintrag in die Ventilmechanik wirksam minimiert werden und so die Lebensdauer des Ventils verbessert werden.

Der Kunststoff-Griff mit umspritzem Edelstahl-Basisteil sorgt für eine gute Korrosionsbeständigkeit bei gleichzeitig niedrigen Herstellkosten. Weiterhin bleibt der Kunststoff des Griffs aufgrund der eingeschränkten Wärmeleitung kühler und lässt sich dadurch besser bedienen.

Für den Lüfter 44, wie er beispielsweise in den Fig. 1 und 3 sichtbar ist, ist bevorzugt eine Drehzahlregelung vorgesehen. Der Lüfter wird mittels PWM abhängig von Leistungsaufnahme und Temperatur des Leistungsmoduls gesteuert, welches z.B. im Elektronikgehäuse 48 untergebracht ist. Die Drehzahl wird analog zur Leistungsaufnahme eingestellt. Die Regelung wird jedoch erst ab einer Modultemperatur von 50 °C zugelassen. Falls die Pumpe in Temperaturbereiche eines möglichen Deratings (temperaturbedingte Leistungsreduktion) hineinkommt, wird automatisch die max. Lüfterdrehzahl angesteuert. Mit dieser Regelung wird ermöglicht, dass bei kalter Pumpe ein minimaler Geräuschpegel erreicht wird, dass im Enddruck bzw. bei geringer Last ein niedriger Geräuschpegel - entsprechend dem Pumpengeräusch - herrscht, dass eine optimale Kühlung der Pumpe bei gleichzeitig niedrigem Geräuschpegel erreicht wird, und dass vor einer temperaturbedingten Leistungsreduktion die max. Kühlleistung sichergestellt wird.

Die maximale Lüfterdrehzahl kann, insbesondere situativ, anpassbar sein. Z. B. kann es für eine hohe Wasserdampfverträglichkeit zielführend sein, die maximale Lüfterdrehzahl herabzusetzen.

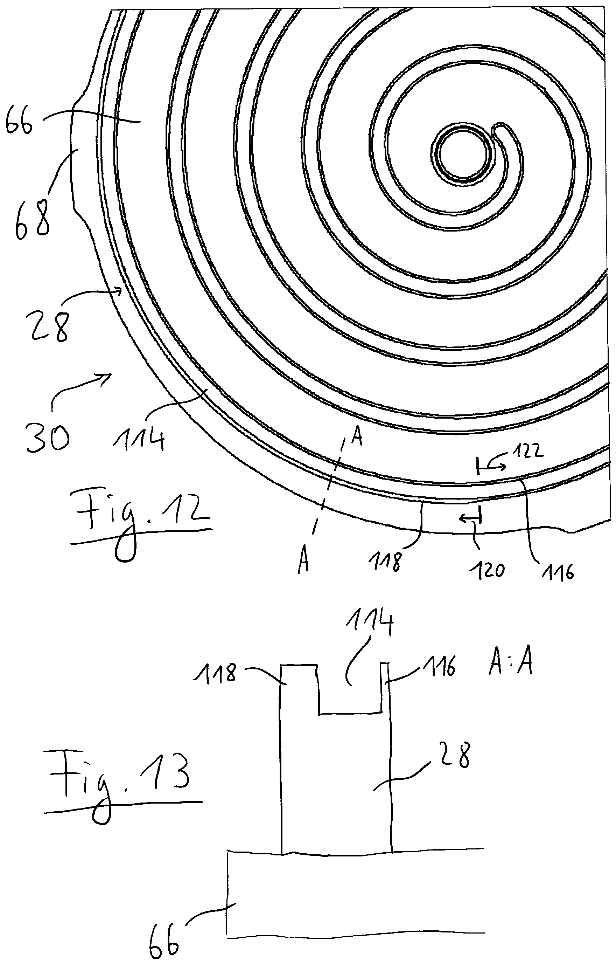

In Fig. 12 ist das bewegliche Spiralbauteil 30 teilweise und gegenüber Fig. 5 vergrößert dargestellt. Eine Schnittansicht des Spiralbauteils 30 entlang der in Fig. 12 angedeuteten Linie A:A ist in Fig. 13 schematisch und nicht maßstabsgerecht dargestellt.

Die Spiralwand 28 weist an ihrem der Grundplatte 66 abgewandten und einer Grundplatte des hier nicht dargestellten, festen Spiralbauteils 24 zugewandten Ende eine Nut 114 zur Einlage eines hier ebenfalls nicht dargestellten Dichtungselements 64 auf, nämlich eines sogenannten Tip Seals. Die Anordnung im Betriebszustand ist z.B. in Fig. 4 gut sichtbar.

Die Nut 114 ist nach außen und nach innen durch zwei gegenüberliegende Seitenwände begrenzt, nämlich durch eine innere Seitenwand 116 und eine äußere Seitenwand 118. In einem ersten Spiralabschnitt 120 ist die äußere Seitenwand 118 dicker ausgeführt als die innere Seitenwand 116 im ersten Spiralabschnitt 120 und dicker als beide Seitenwände 116 und 118 in einem anderen, zweiten Spiralabschnitt 122.

Der erste Spiralabschnitt 120 erstreckt sich vom in Fig. 12 angedeuteten Ort bis zum äußeren Ende der Spiralwand 28, wie es beispielsweise auch in Fig. 5 angedeutet ist. Der erste Spiralabschnitt 120 erstreckt sich hier beispielhaft über etwa 163°.

Der erste Spiralabschnitt 120 bildet einen äußeren Endabschnitt der Spiralwand 28. Dabei ist der erste Spiralabschnitt 120 zumindest teilweise, insbesondere vollständig in einem nicht pumpaktiven Bereich der Spiralwand 28 angeordnet. Insbesondere kann der erste Spiralabschnitt 120 den nicht pumpaktiven Bereich der Spiralwand 28 zumindest im Wesentlichen vollständig ausfüllen.

Wie es in Fig. 5 sichtbar ist, kann bevorzugt der erste Zwischenabschnitt 70 zwischen zwei Haltevorsprüngen 68, welcher eine größere radiale Höhe hat, als andere Zwischenabschnitte 72 und 74, dem ersten Spiralabschnitt 120 gegenüberliegend angeordnet sein. Eine durch die dickere Seitenwand 118 eingebrachte Unwucht kann somit durch das größere Gewicht des ersten Zwischenabschnitt 70 ausgeglichen werden.

Für eine geringe Systembelastung der Lager und anderer Bauteile sollte das bewegliche Spiralbauteil allgemein bevorzugt ein geringes Eigengewicht besitzen. Daher werden die Spiralwände generell sehr dünn ausgeführt. Weiterhin ergeben sich bei dünneren Wänden geringere Pumpenabmessungen (signifikanter Außendurchmesser). Die Seitenwände der Tip Seal-Nut sind in der Folge besonders dünn. Das Verhältnis der TipSeal-Wanddicke zur gesamten Spiralwanddicke beträgt z.B. höchstens 0,17. Aufgrund der Tip Seal-Nut ist jedoch die Spiralwandspitze sehr empfindlich gegenüber Stößen beim Handling, wie etwa bei der Montage oder beim Wechseln des Tip Seal. Durch leichte Stöße, z. B. auch beim Transport, kann die Seitenwand der Nut nach innen gedrückt werden, sodass sich das Tip Seal nicht mehr montieren lässt. Zur Lösung dieses Problems umfasst die Nut eine unsymmetrische Wanddicke, insbesondere eine nach außen lokale Aufdickung der Spiralwand. Dieser Bereich ist bevorzugt nicht pumpaktiv und kann daher mit einer größeren Toleranz gefertigt werden. Durch die einseitige Aufdickung an der, insbesondere letzten halben, Windung werden Schädigungen deutlich reduziert. An übrigen Stellen des Bauteils ist bevorzugt eine Aufdickung der Spiralwand nicht notwendig, da die Wand durch überstehende Elemente des Bauteils geschützt ist.

Die in Fig. 1 gezeigte Luftleithaube 46 definiert einen Luftstrom, wie er durch einen gestrichelten Pfeil 124 angedeutet ist. Der Lüfter 44 ist mit einer Steuerungseinrichtung in dem Elektronikgehäuse 48 über ein nicht dargestelltes Kabel, welches durch die Luftleithaube 46 verläuft, und über eine Steckverbindung verbunden. Diese umfasst eine Buchse 126 und einen Stecker 128. Die Buchse 126 ist am Elektronikgehäuse 48 gelagert und/oder an einer in dem Elektronikgehäuse 48 angeordneten Platine befestigt. Die Buchse 126 ist beispielsweise auch in den Fig. 2 und 3 sichtbar. Der Stecker 128 ist über das nicht dargestellte Kabel mit dem Lüfter 44 verbunden.

Die Steckverbindung 126, 128 ist durch eine Trennwand 130 von dem Luftstrom 124 getrennt. Der Luftstrom 124, der zum Beispiel Stäube oder ähnliche Verschmutzungen enthalten kann, wird somit von der Steckverbindung 126, 128 ferngehalten. Somit wird einerseits die Steckverbindung 126, 128 selbst geschützt und es wird andererseits verhindert, dass die Verschmutzungen durch die für die Buchse 126 vorgesehene Öffnung im Elektronikgehäuse 48 in dieses hinein und zur Steuerungseinrichtung und/oder Leistungselektronik gelangen.

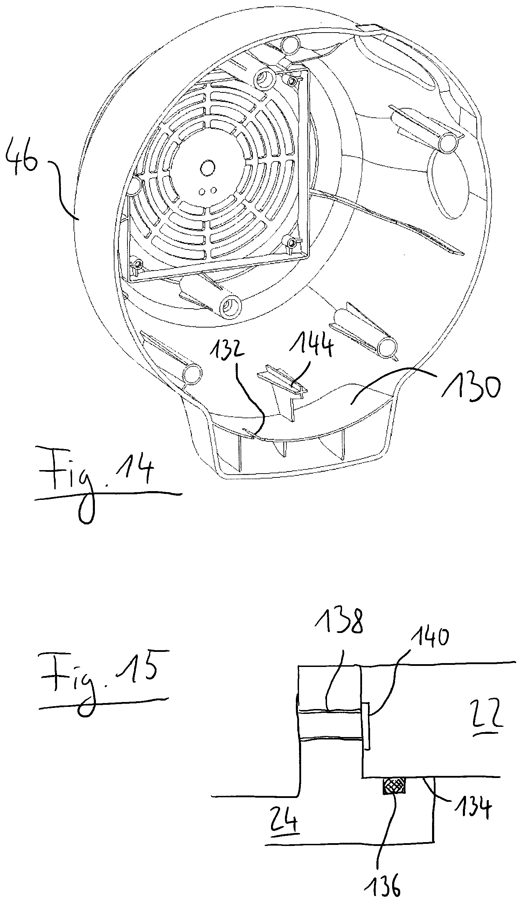

Die Luftleithaube 46 ist in Fig. 14 separat und perspektivisch dargestellt. Es ist unter anderem die Trennwand 130 mit dem dahinter definierten, für den Stecker 128 vorgesehenen Raum sichtbar. Die Trennwand 130 umfasst eine hier als V-förmige Kerbe ausgeführte Ausnehmung 132 zur Durchführung eines Kabels vom Stecker 128 zum Lüfter 44.

Z.B. zur Kostenersparnis können kostengünstige Steckverbinder ohne Abdichtung (z.B. kein IP-Schutz) zum Einsatz kommen, da die Trennwand 130 dafür sorgt, dass die angesaugte Luft nicht über den Durchbruch des Steckverbinders 126, 128 an die Elektronik gelangt. Das Kabel des Lüfters wird durch die V-förmige Kerbe 132 seitlich durch die Trennwand 130 geführt. Die Kerbe 132 weist einen seitlichen Versatz zu dem Steckverbinder 126, 128 auf, wodurch eine Labyrinthwirkung und somit eine weitere Verringerung der Leckage von Kühlluft zu dem Steckverbinder 126, 128 erreicht werden. Durch eine Trennwand 130 innerhalb der Luftleithaube 46 wird außerdem die Luftführung in den Kanal 50 zwischen Elektronikgehäuse 48 und Pumpengehäuse 22 verbessert. Es entsteht weniger Verwirbelung und Gegendruck für den Lüfter 44.

Die Fig. 15 zeigt einen Anlagebereich zwischen dem ersten Gehäuseelement 22 und dem zweiten Gehäuseelement bzw. feststehenden Spiralbauteil 24 in einer schematischen Schnittdarstellung. Das zweite Gehäuseelement 24 ist mit einer Übergangspassung 134 teilweise in das erste Gehäuseelement 22 eingesteckt. Dabei ist eine Abdichtung mittels eines O-Rings 136 vorgesehen. Die Übergangspassung 134 dient zum Beispiel auch der Zentrierung des zweiten Gehäuseelements 24 gegenüber dem ersten Gehäuseelement 22.

Zu Wartungszwecken, zum Beispiel zum Austausch des Dichtungselements 64, muss das zweite Gehäuseelement 24 zum Beispiel demontiert werden. Dabei kann es vorkommen, dass die Übergangspassung 134 oder der O-Ring 136 klemmen, wenn das zweite Gehäuseelement 24 nicht gerade genug herausgezogen wird. Zur Lösung dieses Problems ist ein Abdrückgewinde 138 vorgesehen. Bevorzugt kann auch zumindest im Wesentlichen radial gegenüberliegend ein zweites Abdrückgewinde vorgesehen sein. Zum möglichst geraden und geführten Lösen des zweiten Gehäuseelements 24 kann eine Schraube in das Abdrückgewinde 38 eingeschraubt werden, bis die Schraube aus diesem heraus hervorsteht und in Anlage mit dem ersten Gehäuseelement 22 gelangt. Durch weiteres Einschrauben werden die Gehäuseelemente 22 und 24 voneinander weggedrückt.

Zum Abdrücken können zum Beispiel die zur Befestigung des zweiten Gehäuseelements 24 am ersten Gehäuseelement 22 vorgesehenen Befestigungsschrauben 142 verwendet werden, wie sie beispielsweise in den Fig. 1 und 3 bezeichnet sind. Zu diesem Zweck weist das Abdrückgewinde 138 bevorzugt die gleiche Gewindeart auf, wie für die Befestigungsschrauben 142 vorgesehene Befestigungsgewinde.

Am zweiten Gehäuseelement 22 ist eine Senkung 140 vorgesehen, die dem Abdrückgewinde 138 zugeordnet ist. Falls beim Einschrauben der Schraube in das Abdrückgewinde 138 Abriebpartikel ausgetragen werden, sammeln sich diese in der Senkung 140. Somit wird verhindert, dass derartige Abriebpartikel zum Beispiel eine vollständige Anlage der Gehäuseelemente 22 und 24 aneinander verhindern.

Bei der Montage des festen Spiralbauteils 24 müssen die Schrauben wieder herausgedreht werden, da sonst ein vollständiges Verschrauben (Richtiger Sitz auf der Planfläche des Gehäuses) des feststehenden Spiralbauteils 24 am ersten Gehäuseelement 22 womöglich verhindert ist. Leckage, Schiefstellung und Verringerung der Pumpperformance können die Folge sein. Zur Vermeidung dieses Montagefehlers verfügt die Luftleithaube 46 über wenigstens einen, insbesondere zusätzlichen, in Fig. 14 gezeigten Dom 144, der ein Montieren der Luftleithaube 46 nur dann ermöglicht, wenn die zum Abdrücken verwendeten Schrauben, insbesondere die Befestigungsschrauben 142, wieder entfernt worden sind. Denn die Luftleithaube 46 mit dem Dom 144 ist derart ausgebildet, dass sie mit einem Schraubenkopf einer etwaig in das Abdrückgewinde 138 eingeschraubten Abdrückschraube kollidieren würde, sodass die Luftleithaube 46 nicht vollständig montierbar wäre. Insbesondere kann die Luftleithaube 46 nur bei vollständig demontierten Abdrückschrauben montiert werden.

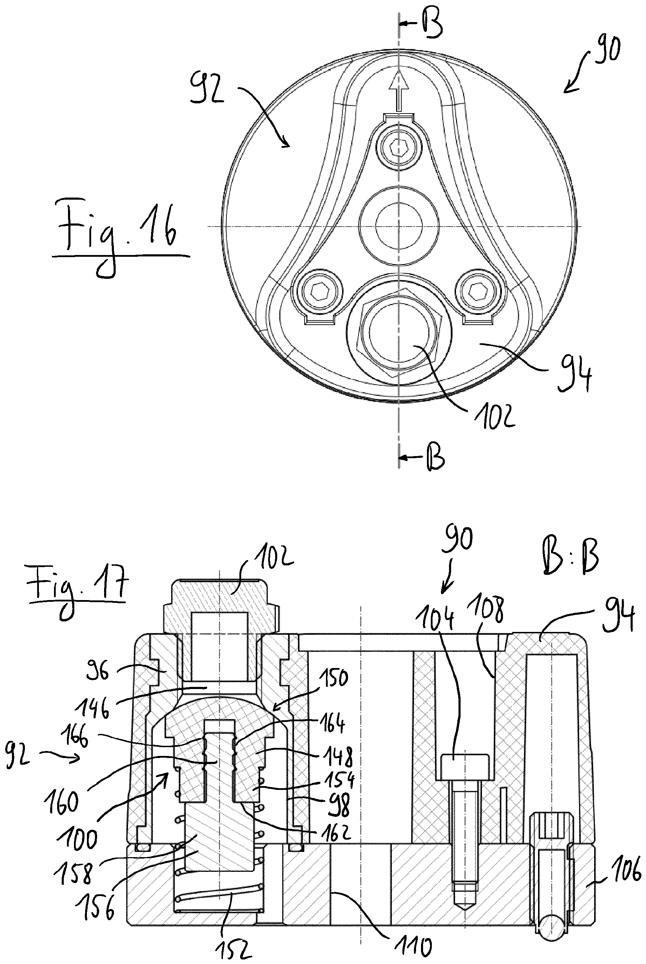

Die Fig. 16 und 17 zeigen ein Gasballastventil 90, welches demjenigen der Fig. 10 und 11 grundsätzlich ähnelt und bevorzugt an einer Scrollpumpe, z.B. der Scrollpumpe 20, angeordnet sein kann. Die Bezugszeichen sind entsprechend vergeben und es wird auf die obigen Ausführungen verwiesen. In den Fig. 16 und 17 ist das Gasballastventil 90 jeweils ohne einen Deckel 112 gezeigt, wie er oben beschrieben ist. Es versteht sich, dass ein solcher auch hier Verwendung finden kann. Nachfolgend wird das Rückschlagventil 100 des Gasballastventils 90 der Fig. 16 und 17 näher beschrieben, wobei Einzelaspekte auch für das obige Gasballastventil 90 bzw. Rückschlagventil 100 der Fig. 10 und 11 gelten, insoweit die Zeichnungen übereinstimmen.

Mit Bezug auf Fig. 17 weist das Rückschlagventil 100 einen Durchgang 146 für ein Fluid, hierfür das Ballastgas, auf. Dieser ist hier mit einem Stopfen 102 lösbar verschlossen. Außerdem umfasst das Rückschlagventil 100 ein bewegliches Schließelement 148 sowie einen Dichtungssitz 150. Das bewegliche Schließelement 148 und der Dichtungssitz 150 sind derart korrespondierend ausgebildet, dass das Schließelement 148 den Durchgang 146 sperrt, wenn es sich - wie in Fig. 17 dargestellt - in Anlage mit dem Dichtungssitz 150 befindet. Die Anlageflächen von Schließelement 148 und Dichtungssitz 150 sind sphärisch ausgebildet.

Außerdem ist das Schließelement 148 mittels einer Feder 152 gegen den Dichtungssitz 150 vorgespannt. Die Feder 152 ist hier als Schraubendruckfeder ausgeführt. Sie ist einerseits am drehbaren Element 106 abgestützt und liegt andererseits am Schließelement 148 an. Dabei erstreckt sich das Schließelement 148 mit einem Federdornabschnitt 154 in einen Innenbereich der Feder 152 hinein. Dies dient insbesondere einer präzisen Führung des Schließelements 148 in Bezug auf die Feder 152. Das Masseelement 152 ist zumindest teilweise im Innenbereich der Feder 152 angeordnet, was einen kompakten Aufbau ermöglicht.

Das Rückschlagventil 100 umfasst ferner ein Masseelement 156, welches mit dem Schließelement 148 fest verbunden ist. Während das Schließelement 148 hier beispielhaft aus Kunststoff hergestellt ist, ist das Masseelement 156 zum Beispiel aus Metall, bevorzugt Stahl, hergestellt. Das Masseelement 156 verleiht somit der beweglichen Baugruppe aus Schließelement 148 und Masseelement 156 eine deutlich größere Masse, als das Schließelement 148 alleine hätte. Damit weist diese Baugruppe eine hohe Trägheit auf, was wie oben beschrieben zur Reduktion von Schallemissionen im Betrieb des Gasballastventils 90 in einem Vakuumgerät, insbesondere einer Vakuumpumpe, vorzugsweise einer Scrollpumpe, führt.

Das Masseelement 156 umfasst einen Masseabschnitt 158, der zu dem Zweck, eine hohe Masse zu erreichen, möglichst groß ausgeführt ist. Außerdem umfasst das Masseelement 156 einem Verbindungsabschnitt 160, der zu dem Zweck ausgebildet ist, eine Verbindung zum Schließelement 148 herzustellen. Der Masseabschnitt 158 und der Verbindungsabschnitt 160 sind durch einen Absatz 162 voneinander getrennt.

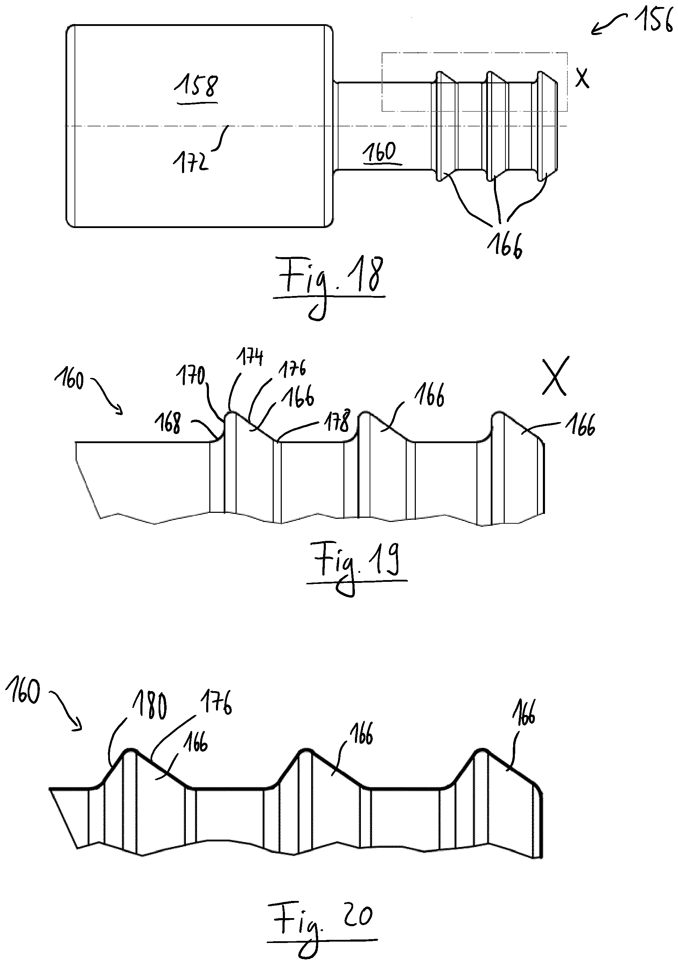

Die Verbindung zwischen Masseelement 156 und Schließelement 148 ist hier derart ausgeführt, dass der Verbindungsabschnitt 160 des Masseelements 156 in eine Ausnehmung 164 des Schließelements 148 eingesteckt ist. Um das Masseelement 156 bzw. den Verbindungsabschnitt 160 in der Ausnehmung zu halten, weist der Verbindungsabschnitt 160 mehrere Erhebungen 166 auf, die als Widerhaken wirken. Auf die Erhebungen 166 wird nachfolgend mit Bezug auf die Fig. 18 bis 20 noch näher eingegangen. Alternativ zu den Erhebungen 166 könnte der Verbindungsabschnitt 160 beispielsweise auch ein Gewinde aufweisen und in das Schließelement 148 eingeschraubt sein. Auch eine bloße Presspassung, etwa zwischen einem zylindrischen Verbindungsabschnitt 160 und einer zylindrischen Ausnehmung 164, ist denkbar.

Das Masseelement 156 ist in diesem Ausführungsbeispiel auf einer Seite des Schließelements 148 angeordnet, welche der Anlagefläche des Schließelements 148 zur Anlage mit dem Dichtungssitz 150 abgewandt ist. Grundsätzlich ist auch eine umgekehrte Anordnung denkbar. So könnte sich das Masseelement 156 etwa auch ausgehend vom Schließelement 148 in Fig. 17 nach oben erstrecken, wobei die Verbindungsmittel entsprechend anzupassen wären. Vereinfacht ausgedrückt kann das Masseelement 156 also beispielsweise in einer Sperrrichtung, welche in Fig. 17 von unten nach oben verläuft, vor dem Schließelement 148 angeordnet sein, wie es in Fig. 17 der Fall ist, und/oder auch in Sperrrichtung hinter dem Schließelement 148. Grundsätzlich könnte das Masseelement 156 auch in das Schließelement 148 vollständig integriert sein.

In Fig. 18 ist eine beispielhafte Ausführungsform eines Masseelements 156 näher veranschaulicht. Das Masseelement 156 umfasst einen Masseabschnitt 158 und einen Verbindungsabschnitt 160. Der Masseabschnitt 158 und der Verbindungsabschnitt 160 sind im Wesentlichen zylindrisch ausgebildet. Bei dem Masseelement 156 kann es sich beispielsweise um ein Drehteil, d.h. ein durch Drehen hergestelltes Bauteil, handeln.

Der Verbindungsabschnitt 160 ist mit umlaufenden Erhebungen 166 ausgestattet, die im mit einem Schließelement 148 verbundenen Zustand Widerhaken bilden und den Verbindungsabschnitt 160 in einer entsprechenden Ausnehmung 164 des Schließelements 148 halten. Die Ausnehmung 164 kann zum Beispiel zu den Erhebungen 166 korrespondierende, vorgeformte, umlaufende Ausnehmungen aufweisen. Alternativ können die Erhebungen 166 das Material des Schließelements 148 beim Einführen des Verbindungsabschnitts 160 in die Ausnehmung 164 teilelastisch verformen und anschließen durch elastische Kräfte in der Ausnehmung 164 halten, wobei sich durch die Form der Erhebungen 166 eine Hemmung gegen ein Entfernen des Verbindungsabschnitt 160 aus der Ausnehmung 164 ausbildet.

In der in Fig. 18 gezeigten Ausführungsform sind drei Erhebungen 166 vorgesehen. Diese Anzahl hat sich als besonders vorteilhaft im Hinblick auf die Festigkeit der Verbindung erwiesen. Es können aber beispielsweise auch mehr oder weniger Erhebungen vorgesehen sein.

In Fig. 18 ist ein Teilbereich X gekennzeichnet, der in Fig. 19 vergrößert dargestellt ist. Insbesondere ist die Form der Erhebungen 166 hier gut sichtbar. In dieser Ausführungsform sind die drei Erhebungen 166 im Wesentlichen identisch ausgeführt, weshalb die Form lediglich anhand der in Fig. 19 linken Erhebung 166 näher veranschaulicht wird.

Die Erhebung 166 umfasst eine Rundung 168, eine Ringfläche 170, welche sich senkrecht zur in Fig. 18 angedeuteten Zylinderachse 172 erstreckt, eine Rundung 174, einen kegelförmigen Abschnitt 176 sowie eine weitere Rundung 178. Die Rundungen können grundsätzlich entfallen.

In Fig. 20 ist ein Verbindungsabschnitt 160 in einer Darstellung gezeigt, die derjenigen der Fig. 19 ähnelt. Hier sind ebenfalls drei Erhebungen 166 vorgesehen, die denjenigen der Fig. 19 ähneln. Als Unterschied ist hier allerdings hervorzuheben, dass anstelle einer zur Zylinderachse 172 senkrechten Fläche 170 ein weiterer kegelförmiger Abschnitt 180 vorgesehen ist. Dieser ist in Bezug auf den kegelförmigen Abschnitt 176 entgegengesetzt kegelförmig.

## Bezugszeichenliste

| | |
|---|---|
| 20 | Scrollpumpe |
| 22 | erstes Gehäuseelement |
| 24 | zweites Gehäuseelement/feststehendes Spiralbauteil |
| 26 | Spiralwand |
| 28 | Spiralwand |
| 30 | bewegliches Spiralbauteil |
| 32 | Exzenterwelle |
| 34 | Motor |
| 36 | Wälzlager |
| 38 | Exzenterzapfen |
| 40 | Wälzlager |
| 42 | Wellbalg |
| 44 | Lüfter |
| 46 | Luftleithaube |
| 48 | Elektronikgehäuse |
| 50 | Kanal |
| 52 | Kammer |
| 54 | Rippe |
| 56 | Ausnehmung |
| 58 | Rippe |
| 60 | Drucksensor |
| 62 | Kanal |
| 64 | Dichtungselement |
| 66 | Grundplatte |
| 68 | Haltevorsprung |
| 70 | erster Zwischenabschnitt |
| 72 | zweiter Zwischenabschnitt |
| 74 | dritter Zwischenabschnitt |
| 76 | Einspannvorrichtung |
| 78 | Dreibackenfutter |
| 80 | Ausnehmung |
| 82 | Ausgleichsgewicht |
| 84 | Befestigungsbohrung |
| 86 | Wellenabsatz |
| 88 | Gehäuseschulter |
| 90 | Gasballastventil |
| 92 | Betätigungsgriff |
| 94 | Kunststoffkörper |
| 96 | Basiselement |
| 98 | Bohrung |
| 100 | Rückschlagventil |
| 102 | Stopfen |
| 104 | Befestigungsschraube |
| 106 | drehbares Element |
| 108 | Bohrung |
| 110 | Bohrung |
| 112 | Deckel |
| 114 | Nut |
| 116 | innere Seitenwand |
| 118 | äußere Seitenwand |
| 120 | erster Spiralabschnitt |
| 122 | zweiter Spiralabschnitt |
| 124 | Luftstrom |
| 126 | Buchse |
| 128 | Stecker |
| 130 | Trennwand |
| 132 | Ausnehmung |
| 134 | Übergangspassung |
| 136 | O-Ring |
| 138 | Abdrückgewinde |

140 Senkung
142 Befestigungsschraube
144 Dom
146 Durchgang
148 Schließelement
150 Dichtungssitz
152 Feder
154 Federdornabschnitt
156 Masseelement
158 Masseabschnitt
160 Verbindungsabschnitt
162 Absatz
164 Ausnehmung
166 Erhebung
168 Rundung
170 Ringfläche
172 Zylinderachse
174 Rundung
176 kegelförmigen Abschnitt
178 Rundung
180 kegelförmigen Abschnitt

## Patentansprüche

**1.** Scrollpumpe (20) umfassend

ein bewegliches, zum Erzeugen einer Pumpwirkung exzentrisch erregbares Spiralbauteil (30), wobei das Spiralbauteil (30) eine Grundplatte (66) und eine sich ausgehend von der Grundplatte (66) erstreckende Spiralwand (28) aufweist,
**dadurch gekennzeichnet,**
**dass** außen an der Grundplatte (66) wenigstens zwei über den Umfang der Grundplatte (66) beabstandete Haltevorsprünge (68) derart vorgesehen sind, dass während der Herstellung der Scrollpumpe (20) die Backen eines Backenfutters (78) an den Haltevorsprüngen (68) angreifen können, um das Spiralbauteil (30) einzuspannen.

**2.** Scrollpumpe (20) nach Anspruch 1,
wobei die Haltevorsprünge (68) über den Umfang der Grundplatte (66) gleichmäßig verteilt angeordnet sind.

**3.** Scrollpumpe (20) nach Anspruch 1 oder 2,
wobei wenigstens oder genau drei Haltevorsprünge (68) vorgesehen sind.

**4.** Scrollpumpe (20) nach einem der vorstehenden Ansprüche,
wobei ein erster Zwischenabschnitt (70) des Umfangs der Grundplatte (66) zwischen zwei benachbarten Haltevorsprüngen (68) eine größere radiale Höhe aufweist, als ein zweiter Zwischenabschnitt (72, 74).

**5.** Scrollpumpe (20) nach Anspruch 4,
wobei der erste Zwischenabschnitt (70) einem äußersten 120°-Abschnitt der Spiralwand (28) gegenüberliegend angeordnet ist.

**6.** Verfahren zur Herstellung einer Scrollpumpe (20), welche ein bewegliches, zum Erzeugen einer Pumpwirkung exzentrisch erregbares Spiralbauteil (30) aufweist,

**dadurch gekennzeichnet,**
**dass** das Spiralbauteil (30) mit einer Grundplatte (66) direkt in eine Einspannvorrichtung (76) eingespannt ist,
wobei die Einspannvorrichtung (76) ein Backenfutter (78) umfasst.

**7.** Verfahren nach Anspruch 6,

wobei die Einspannvorrichtung (76) derart ausgebildet ist, dass ein Werkzeugzugang zu dem Spiralbauteil (30) sowohl von einer Seite der Grundplatte (66), an der eine Spiralwand (28) ausgebildet ist, als auch von der anderen Seite der Grundplatte (66) ermöglicht ist,
wobei das Spiralbauteil (30) zumindest im Wesentlichen in einer Einspannung von beiden Seiten bearbeitet wird.

**8.** Scrollpumpe (20) nach wenigstens einem der Ansprüche 1 bis 5, mit einem Elektronikgehäuse (48), in dem eine oder mehrere Elektronikkomponenten angeordnet sind, wobei innerhalb des Elektronikgehäuses (48) für wenigstens eine Elektronikkomponente eine gesonderte Kammer (52) vorgesehen ist, in der die Elektronikkomponente vergossen ist.

**9.** Scrollpumpe (20) nach wenigstens einem der Ansprüche 1 bis 5 und 8, mit einem Pumpenkörper (24), dessen Innenseite einen Pumpraum begrenzt und an dessen Außenseite ein Ventil (90) zur Steuerung der Zufuhr eines Ballastgases in den Pumpraum angeordnet ist, wobei das Ventil (90) einen Betätigungsgriff (92) aufweist, der mit einem statischen Element (24) des Ventils (90) drehbar und/oder mit einem drehbaren Element (106) des Ventils (90) fest über wenigstens eine Befestigungsschraube (104) verbunden ist,

wobei die Befestigungsschraube (104) durch eine Bohrung (108, 110) im Betätigungsgriff (92) in das statische Element (24) bzw. das drehbare Element (106) eingeschraubt ist,
wobei ein Deckel (112) vorgesehen ist, der die Bohrung (108, 110) verschließt.

**10.** Scrollpumpe (20) nach wenigstens einem der Ansprüche 1 bis 5, 8 und 9, mit einem in seiner Drehzahl steuerbaren Lüfter (44) zur Kühlung der Scrollpumpe (20),

einem Temperatursensor und
einer Steuerungseinrichtung, welche dazu ausgebildet ist, die Drehzahl des Lüfters (44) in Abhängigkeit von einer Leistungsaufnahme eines Antriebs der Scrollpumpe (20) und einer vom Temperatursensor gemessenen Temperatur zu regeln.

**11.** Scrollpumpe (20) nach wenigstens einem der Ansprüche 1 bis 5 und 8 bis 10, umfassend einen elektrisch angetriebenen Lüfter (44) und eine Luftleithaube (46), wobei ein Leiter vom Lüfter (44) zu einem Versorgungsanschluss (128) für den Lüfter (44) führt, wobei der Leiter über einen elektrischen Verbinder (126) mit dem Versorgungsanschluss (128) verbunden ist, und wobei der Verbinder (126) von einem durch die Luftleithaube (46) definierten Luftströmungsweg (124) mittels einer Trennwand (130) getrennt ist.

**Claims**

**1.** A scroll pump (20) comprising

a movable spiral component (30) which can be eccentrically excited to generate a pumping effect,
wherein the spiral component (30) has a base plate (66) and a spiral wall (28) extending starting from the base plate (66),
**characterized in that**
at least two holding projections (68) spaced apart over the periphery of the base plate (66) are provided outside at the base plate (66) such that the jaws of a jaw chuck (78) can engage at the holding projections (68) during the manufacture of the scroll pump (20) to clamp the spiral component (30).

**2.** A scroll pump (20) in accordance with claim 1, wherein the holding projections (68) are arranged uniformly distributed over the periphery of the base plate (66).

**3.** A scroll pump (20) in accordance with claim 1 or claim 2,
wherein at least one or exactly three holding projections (68) are provided.

**4.** A scroll pump (20) in accordance with at least one of the preceding claims, wherein a first intermediate section (70) of the periphery of the base plate (66) between two adjacent holding projections (68) has a larger radial height than a second intermediate section (72, 74).

**5.** A scroll pump (20) in accordance with claim 4, wherein the first intermediate section (70) is arranged disposed opposite an outermost 120° section of the spiral wall (28).

**6.** A method of manufacturing a scroll pump (20) which has a movable spiral component (30) which can be eccentrically excited to generate a pumping effect,

**characterized in that**
a base plate (66) of the spiral component (30) is directly clamped into a clamping apparatus (76),
wherein the clamping apparatus (76) comprises a jaw chuck (78).

**7.** A method in accordance with claim 6,

wherein the clamping apparatus (76) is configured such that a tool access to the spiral component (30) is made possible both from one side of the base plate (66) at which a spiral wall (28) is formed and from the other side of the base plate (66),
wherein the spiral component (30) can at least substantially be machined in a clamping from both sides.

**8.** A scroll pump (20) in accordance with at least one of the claims 1 to 5, comprising
an electronics housing (48) in which one or more electronic components are arranged, wherein a separate chamber (52), in which the electronic component is cast, is provided within the electronics housing (48) for at least one electronic component.

**9.** A scroll pump (20) in accordance with at least one of the claims 1 to 5 and 8, comprising

a pump body (24) whose inner side bounds a pump space and at whose outer side a valve (90) for controlling the supply of a ballast gas into the pump space is arranged,
wherein the valve has an actuation grip (92) which is rotatable by a static element (24) of the valve (90) and/or which is fixedly connected to a rotatable element (106) of the valve (90) via at least one fastening screw (104),
wherein the fastening screw (104) is screwed through a bore (108, 110) in the actuation grip (92) into the static element (24) or into the rotatable element (106),
wherein a cover (112) is provided which closes the bore (108, 110).

**10.** A scroll pump (20) in accordance with at least one of the claims 1 to 5, 8 and 9, comprising

a fan (44) controllable in its rotational speed for cooling the scroll pump (20);
a temperature sensor; and
a control device which is configured to regulate the rotational speed of the fan (44) in dependence on a power consumption of a drive of the scroll pump (20) and on a temperature measured by the temperature sensor.

**11.** A scroll pump (20) in accordance with at least one of the claims 1 to 5 and 8 to 10, comprising an electrically driven fan (44) and an air guide hood (46), wherein a conductor leads from the fan (44) to a supply connection (128) for the fan (44), wherein the conductor is connected to the supply connection (128) via an electrical connector (126), and wherein the connector (126) is separated from an air flow path (124), defined by the air guide hood (46), by means of a partition wall (130).

## Revendications

**1.** Pompe à spirales (20) comprenant

un composant en spirale (30) mobile, pouvant être excité de manière excentrique pour engendrer un effet de pompage,
le composant en spirale (30) présentant une plaque de base (66) et une paroi en spirale (28) s'étendant à partir de la plaque de base (66),
**caractérisée en ce que**
au moins deux saillies de retenue (68) espacées sur la périphérie de la plaque de base (66) sont prévues à l'extérieur sur la plaque de base (66) de telle sorte que, pendant la fabrication de la pompe à spirales (20), les mâchoires d'un mandrin à mâchoires (78) peuvent s'engager sur les saillies de retenue (68), afin de serrer le composant en spirale (30).

**2.** Pompe à spirales (20) selon la revendication 1, dans laquelle les saillies de retenue (68) sont disposées en étant réparties régulièrement sur la périphérie de la plaque de base (66).

**3.** Pompe à spirales (20) selon la revendication 1 ou 2, dans laquelle sont prévues au moins ou exactement trois saillies de retenue (68).

**4.** Pompe à spirales (20) selon l'une des revendications précédentes,
dans laquelle une première portion intermédiaire (70) de la périphérie de la plaque de base (66) entre deux saillies de retenue (68) adjacentes présente une hauteur radiale supérieure à celle d'une deuxième portion intermédiaire (72, 74).

**5.** Pompe à spirales (20) selon la revendication 4, dans laquelle la première portion intermédiaire (70) est disposée à l'opposée d'une portion de 120° la plus extérieure de la paroi en spirale (28).

**6.** Procédé de fabrication d'une pompe à spirales (20) comprenant un composant en spirale (30) mobile pouvant être excité de manière excentrique pour engendrer un effet de pompage,

**caractérisé en ce que**
le composant en spirale (30) est serré avec une plaque de base (66) directement dans un dispositif de serrage (76),
le dispositif de serrage (76) comprenant un mandrin à mâchoires (78).

**7.** Procédé selon la revendication 6,

dans lequel le dispositif de serrage (76) est réalisé de manière à permettre l'accès d'un outil au composant en spirale (30) aussi bien depuis un côté de la plaque de base (66), sur lequel est formée une paroi en spirale (28), que depuis l'autre côté de la plaque de base (66),
le composant en spirale (30) étant usiné au moins sensiblement depuis les deux côtés avec un seul serrage.

**8.** Pompe à spirales (20) selon l'une au moins des revendications 1 à 5, comportant

un boîtier électronique (48), dans lequel sont disposés un ou plusieurs composants électroniques,
une chambre séparée (52) étant prévue à l'intérieur du boîtier électronique (48) pour au moins un composant électronique, chambre dans laquelle le composant électronique est intégré par coulée.

**9.** Pompe à spirales (20) selon l'une au moins des revendications 1 à 5 et 8, comportant

un corps de pompe (24) dont le côté intérieur délimite une chambre de pompage et sur le côté extérieur duquel est disposée une vanne (90) pour commander l'amenée d'un gaz de ballast dans la chambre de pompage,
la vanne (90) comportant une poignée d'actionnement (92) reliée de façon mobile en rotation à un élément statique (24) de la vanne (90) et/ou solidaire d'un élément rotatif (106) de la vanne (90) par au moins une vis de fixation (104),
la vis de fixation (104) étant vissée dans l'élément statique (24) ou dans l'élément rotatif (106) à travers un alésage (108, 110) dans la poignée d'actionnement (92),
un couvercle (112) étant prévu, qui referme l'alésage (108, 110).

**10.** Pompe à spirales (20) selon l'une au moins des revendications 1 à 5, 8 et 9, comportant

un ventilateur (44) à vitesse de rotation contrôlable pour refroidir la pompe à spirales (20),
un capteur de température et
un dispositif de commande qui est réalisé pour réguler la vitesse de rotation du ventilateur (44) en fonction d'une puissance absorbée d'un entraînement de la pompe à spirales (20) et d'une température mesurée par le capteur de température.

**11.** Pompe à spirales (20) selon l'une au moins des revendications 1 à 5 et 8 à 10, comportant
un ventilateur (44) entraîné par voie électrique et un capot de guidage d'air (46), un conducteur menant du ventilateur (44) à un raccord d'alimentation (128) pour le ventilateur (44), le conducteur étant relié au raccord d'alimentation (128) par un connecteur électrique (126), et le connecteur (126) étant séparé d'un trajet d'écoulement d'air (124), défini par le capot de guidage d'air (46), au moyen d'une cloison de séparation (130).

20
34
36
22
42
36
38
40
82
32
82
31
30
142
26
24
28
46
44
33
124
130
128
126
48
50
Fig. 1

52
52
48
50
54
126
PE 600 000

Fig. 2

Fig. 3
20
22
24
56
58
142
142
142
54
126
50
60
90
44

24
62
26
28
64
60
46
44
Fig. 4

120
68
30
74
66
70
68
28
122
Fig. 5
72
120
68
68
30
72
74
66
28
68
68
70
Fig. 6

76
80
78

Fig. 7

9
21,3
88
82
86
84
32
9,7
11
11
88
82
86
84
13,7
17,5
32

Fig. 8

Fig. 9

112
90
94
96
92
102
Fig. 10
102
112
108
98
104
94
90
96
92
100
110
106
Fig. 11

66
68
28
30
114
A
A
122
118
120
116
114
118
116
A:A
28
66

Fig. 12

Fig. 13

46
132
144
130
Fig. 14

Fig. 15
138
140
22
24
134
136

B
90
92
Fig. 16
94
102
B

Fig. 17
102
90
B:B
104
108
94
96
146
150
164
166
92
148
154
160
98
100
162
158
106
156
152
110

Fig. 18

Fig. 19

160
180
176
166
166
166

Fig. 20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2013251543 A1
- US 2008181801 A1
- CN 206010470 U
- CN 103084887 A